# EUROPÄISCHE PATENTSCHRIFT

(11) **EP 3 514 038 B1**
(45) Veröffentlichungstag und Bekanntmachung des Hinweises auf die Patenterteilung: **30.04.2025**
(21) Anmeldenummer: 19151962.8
(22) Anmeldetag: 15.01.2019
(51) Int. Cl.: B62B 3/00, B62B 5/00

(54) **ANORDNUNG MIT EINEM TRANSPORTWAGEN UND EINER SCHUTZEINRICHTUNG**
ARRANGEMENT WITH A TRANSPORT TROLLEY AND A PROTECTIVE DEVICE
AMÉNAGEMENT AVEC CHARIOT DE TRANSPORT ET DISPOSITIF DE PROTECTION

(30) Priorität: 17.01.2018 DE 102018200736
(43) Veröffentlichungstag der Anmeldung: 24.07.2019
(73) Patentinhaber: Schröder, Stephan, 59348 Lüdinghausen (DE)
(72) Erfinder: Schröder, Stephan, 59348 Lüdinghausen (DE)
(74) Vertreter: BRP Renaud & Partner mbB Rechtsanwälte Patentanwälte Steuerberater

(56) Entgegenhaltungen:
- EP-A1- 0 376 857
- EP-A1- 2 905 197
- EP-A2- 1 167 234
- WO-A1-2013/131550
- GB-A- 2 000 101
- US-A- 2 455 237
- US-A- 5 193 955

## Beschreibung

Die vorliegende Erfindung betrifft eine Anordnung mit einem Transportwagen und einer Schutzeinrichtung.

Ein gattungsgemäßer Transportwagen weist einen regalähnlichen Aufbau auf und umfasst in der Regel ein Rahmengestell, in das bei Bedarf mehrere Böden eingesetzt werden können. Auf dem jeweiligen Boden können unterschiedliche Gegenstände als Transportgut gelagert bzw. transportiert werden. Bekannt sind beispielsweise Transportwagen zum Transportieren und/oder zur Lagerung von Pflanzen oder kurz Pflanzentransportwagen, mit denen Pflanzen, beispielsweise Blumen und dergleichen, als Transportgut transportiert und/oder gelagert werden. Wünschenswert ist es dabei, den Transportwagen bedarfsweise seitlich zumindest teilweise zu bedecken bzw. abzudecken. Diese Bedeckung oder auch Abdeckung dient insbesondere dem Schutz des Transportguts bzw. des Transportwagens, beispielsweise vor äußeren Einflüssen, und/oder als Transportsicherung, um Beschädigungen des Transportguts während des Transports zu verhindern oder zumindest zu reduzieren. Auch kann hierdurch ein optischer Schutz erreicht werden.

Aus der DE 10 2014 001 331 A1 sowie der EP 2 905 197 A1 ist eine Schutzeinrichtung zur Umhüllung eines Transportwagens bekannt. Die Schutzeinrichtung weist eine flächige Hülle auf, an der oberseitig Haken zum Einhängen an den Transportwagen vorgesehen sind. Zudem ist an querendseitigen Enden der Hülle jeweils ein Verbindungsmittel angebracht, wobei die Hülle in einer Umfangsrichtung des Transportwagens den Transportwagen gänzlich umhüllt und die Verbindungsmittel in der Art eines Klettverschlusses zusammenwirken, so dass die Hülle den Transportwagen seitlich gänzlich bedeckt und umhüllt.

Aus der WO 2013/131550 A1 ist eine Bedeckung für Postkisten bekannt. Um das Aufnehmen von unterschiedlich großen Gegenständen in den Postkisten und das Rausragen von Gegenständen aus der Bedeckung zu erlauben, sind mehrere Schlitze in der Bedeckung eingebracht sowie mehrere Bänder an der Bedeckung angebracht. Die Schlitze können mittels Reißverschlüssen geschlossen werden. Die US 2,455,237 A zeigt eine Plane zum Abdecken von Frachtgut in einem Flugzeug. An der Plane sind Schlaufen sowie Haken angebracht, um die Plane am Boden des Flugzeug zu befestigen.

In der GB 2 000 101 A ist eine Abdeckung für eine Palette offenbart. Auf der Palette sind gegenüberliegende Träger angeordnet. Ein Versteifungselement fixiert die Träger relativ zueinander und versteift diese.

In der EP 1 167 234 A2 ist ein Verschluss zum Verschließen einer offenen Seite eines Containers offenbart, dass die offene Seite umlaufend mit dem Container verbunden ist.

In der EP 0 376 857 A1 wird eine Abdeckung auf einen Transportwagen gestülpt und am Boden des Transportwagens mit Plomben gesichert.

In der US 5,193,955 wird ein Netz aus Gurten auf das Transportgut auf einem Lastkraftwagen gelegt. Die Gurte des Netzes werden mit der Unterkante einer Tragefläche des Lastkraftwagens befestigt.

Die gattungsgemäßen Transportwagen sind vielfältig einsetzbar. Insbesondere lässt sich der jeweilige Transportwagen bedarfsweise mit einer unterschiedlichen Anzahl von Böden, welche in einer Höhenrichtung unterschiedliche Abstände zueinander aufweisen können, bestücken, um unterschiedliches Transportgut, beispielsweise Pflanzen mit unterschiedlicher Höhe, zu transportieren. Dies führt insbesondere dazu, dass je nach Einsatz des Transportwagens verschiedene geometrische Gegebenheiten, insbesondere unterschiedliche äußere Dimensionen, des Transportwagens vorliegen können. Beispielsweise kann die Verwendung von unterschiedlichen Anzahlen von Böden zu einer Änderung der äußeren Geometrie des Transportwagens, insbesondere in Umfangsrichtung, führen. Dies wird in der Regel durch bekannte Schutzeinrichtungen verstärkt. In der Folge kann die Schutzeinrichtung eine unzureichende Bedeckung des Transportwagens gewährleisten und das Transportgut somit unzureichend schützen.

Die vorliegende Erfindung beschäftigt sich daher mit der Aufgabe, für eine Anordnung mit einem Transportwagen und einer Schutzeinrichtung verbesserte oder zumindest andere Ausführungsformen anzugeben, die sich insbesondere durch eine verbesserte und/oder vereinfachte und/oder zuverlässigere Bedeckung des Transportwagens auszeichnen.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Anordnung mit einem Transportwagen und einer Schutzeinrichtung an einer Abdeckung bzw. Bedeckung der Schutzeinrichtung Mittel anzubringen, welche in einem an einem Transportwagen montierten Montagezustand der Schutzeinrichtung zu einem Spannen der Bedeckung sowohl in einer Höhenrichtung als auch in einer quer zur Höhenrichtung verlaufenden Querrichtung führen. Im Montagezustand verläuft die Querrichtung der Schutzeinrichtung bzw. der Bedeckung in einer Umfangsrichtung des Transportwagens bzw. entspricht der Umfangsrichtung, wobei Außenseiten oder kurz Seiten des Transportwagens in Umfangsrichtung aufeinander folgen. Das Spannen der Schutzeinrichtung in beiden Richtungen führt einerseits dazu, dass sich die Bedeckung an möglichen Dimensionsänderung des Transportwagens, insbesondere in Umfangsrichtung, anpasst, so dass eine zuverlässigere und/oder einfachere Bedeckung und somit Schutz des Transportwagens sowie von sich innerhalb des Transportwagens befindendem Transportgut möglich ist. Andererseits wird eine Gefahr der relativen Verschiebung der Bedeckung zum Transportwagen verhindert oder zumindest reduziert, so dass die Sicherung von sich im Transportwagen befindendem Transportgut verbessert gewährleistet wird. Dabei wird das Spannen der Bedeckung in Höhenrichtung durch das Anbringen der entsprechenden Mittel am Transportwagen erzielt, so dass insbesondere ein Verschieben der Bedeckung relativ zum Transportwagen in Höhenrichtung, insbesondere ein Wegrutschen der Bedeckung entlang des Transportwagens, verhindert oder zumindest reduziert ist.

Dem Erfindungsgedanken entsprechend ist die Schutzeinrichtung zum seitlichen Abdecken bzw. Bedecken des Transportwagens, das heißt insbesondere zum außenseitigen Bedecken des Transportwagens in einer Umfangsrichtung des Transportwagens vorgesehen. Der Transportwagen kann prinzipiell zum Transportieren, insbesondere auch zum Lagern, beliebiger Transportgüter zum Einsatz kommen. Hierzu zählen insbesondere Pflanzen und dergleichen, beispielsweise Blumen, so dass der Transportwagen insbesondere als ein Pflanzentransportwagen ausgestaltet sein kann. Die Bedeckung ist aus einem Stoff hergestellt, besteht insbesondere aus dem Stoff, der nachfolgend auch als Bedeckstoff bezeichnet wird. Die Bedeckung erstreckt sich in Höhenrichtung und in Querrichtung, insbesondere rechteckförmig oder rechteckartig, wobei die Bedeckung zweckmäßig flächig ausgebildet ist. Die Bedeckung ist somit in der Lage, in einem am Transportwagen angebrachten Zustand, insbesondere in einem gänzlich am Transportwagen montierten Montagezustand, zumindest eine in Umfangsrichtung des Transportwagens verlaufende Seite des Transportwagens seitlich zu bedecken. Die Schutzeinrichtung weist zudem mindestens ein Haltemittel zum Anbringen der Bedeckung an einer oberen Struktur des Transportwagens, insbesondere an einer Oberseite des Transportwagens, auf, wobei das Haltemittel derart ausgestaltet ist, dass die Schutzeinrichtung, insbesondere die Bedeckung, beim am Transportwagen angebrachten Zustand des Haltemittels am Transportwagen gehalten ist. Die Schutzeinrichtung weist zudem wenigstens ein in Höhenrichtung zu dem mindestens einem Haltemittel beabstandetes Spannmittel auf, das ebenfalls am Transportwagen, und zwar an einer von der oberen Struktur beabstandeten unteren Struktur des Transportwagens, insbesondere an einer Unterseite des Transportwagens, angebracht wird. Das wenigstens eine Haltemittel und/oder das wenigstens eine Spannmittel sind/ist vorzugsweise lösbar am Transportwagen anbringbar. Sind das wenigstens eine Haltemittel und das zumindest eine Spannmittel am Transportwagen angebracht, spannen diese die Bedeckung in Höhenrichtung. Dabei ist es insbesondere vorstellbar, dass zunächst das zumindest eine Spannmittel an der unteren Struktur des Transportwagens angebracht und anschließend das Haltemittel an der oberen Struktur des Transportwagens angebracht wird. Selbstverständlich ist auch eine umgekehrte Vorgehensweise vorstellbar. Die Schutzeinrichtung weist ferner wenigstens ein Verbindungsmittel und wenigstens ein in Querrichtung zum Verbindungsmittel beabstandetes Gegenverbindungsmittel auf, welche die Bedeckung im Montagezustand in Querrichtung spannen. Im Montagezustand, in dem das zumindest eine Haltemittel, das zumindest eine Spannmittel, das zumindest eine Verbindungsmittel sowie das zumindest eine Gegenverbindungsmittel jeweils angebracht sind, ist die Bedeckung über eigene Bestandteile der Schutzeinrichtung also sowohl in Höhenrichtung als auch in Querrichtung gespannt.

Zum Spannen der Bedeckung in Querrichtung ist es vorstellbar, dass das Verbindungsmittel und das Gegenverbindungsmittel an den Transportwagen angebracht werden. Das heißt, dass das Verbindungsmittel und das Gegenverbindungsmittel zum Anbringen an den Transportwagen ausgestaltet sind. Bevorzugt sind/ist das Verbindungsmittel und/oder das Gegenverbindungsmittel lösbar am Transportwagen anbringbar.

Es können das Verbindungsmittel und das Gegenverbindungsmittel zusammenwirken und somit eine, vorzugsweise lösbare, Verbindung bilden. Das heißt, dass zum Spannen der Bedeckung in Querrichtung keine Verbindung bzw. kein Anbringen des Verbindungsmittels und des Gegenverbindungsmittels am Transportwagen notwendig ist. Hierbei können das Verbindungsmittel und das Gegenverbindungsmittel insbesondere formschlüssig zusammenwirken. Vorzugsweise sind das Haltemittel und/oder das Spannmittel formschlüssig am Transportwagen angebracht. Dies erlaubt neben einem einfachen Anbringen der entsprechenden Mittel am Transportwagen eine vereinfachte Ausgestaltung der Mittel.

Die Bedeckung bzw. der Bedeckstoff ist vorzugsweise derart gewählt, dass die Bedeckung sich vereinfacht verformen lässt. Insbesondere kann die Bedeckung derart ausgestaltet sein, dass sie sich ohne äußere Kraftanwendung und lediglich schwerkraftbedingt deformiert, wenn sie nicht gehalten wird. Die Bedeckung ist also insbesondere in der Art eines Tuchs verformbar.

Bevorzugt ist die Bedeckung aus einem Kunststoff, insbesondere aus einem Polymer, beispielsweise aus Polyester, hergestellt. Das heißt, dass der Bedeckstoff ein Kunststoff, insbesondere ein Polymer, beispielsweise Polyester, sein kann. Dies führt zu einer verbesserten Stabilität und/oder einem verringerten Gewicht der Bedeckung. Der Bedeckstoff kann also insbesondere eine Gitterplane, eine PVC-Plane, ein Vinylgitternetz, ein PVC-Gewebe, ein Meshgewebe und dergleichen sein.

Prinzipiell können das Haltemittel und/oder das Spannmittel und/oder das Verbindungsmittel und/oder das Gegenverbindungsmittel integral an der Bedeckung ausgeformt bzw. ausgebildet sein. Bevorzugt sind Ausführungsformen, bei denen besagte Mittel von der Bedeckung separat und an diese angebracht sind. Dies erlaubt ein vereinfachtes und flexibleres Anbringen der Bedeckung an den Transportwagen.

Denkbar sind Ausführungsformen, bei denen das Haltemittel und/oder das Spannmittel eine an der Bedeckung angebrachte Schlaufe aufweist. Dabei ist es möglich, die Schlaufe an den Transportwagen anzubringen.

Zu denken ist auch an Varianten, bei denen das Haltemittel und/oder das Spannmittel einen Haken zum Anbringen an den Transportwagen aufweist. Besagter Haken kann dabei an besagte Schlaufe angebracht sein. Dies ermöglicht es insbesondere, den Haken bei Bedarf, beispielsweise im Falle einer Beschädigung und/oder zur verbesserten Anpassung an unterschiedlichen Transportwagen, auszutauschen.

Bevorzugt ist der Haken als ein Karabinerhaken ausgebildet. Vorstellbar sind auch Flachhaken. Dies erlaubt ein vereinfachtes Anbringen des Hakens an den Transportwagen. Der Haken, insbesondere der Karabinerhaken, ist vorteilhaft derart ausgestaltet, insbesondere am Bedeckstoff angebracht, dass er austauschbar ist, so dass er bei Bedarf ausgetauscht und/oder ersetzt werden kann.

Denkbar sind auch Varianten, bei denen das Haltemittel und/oder das Spannmittel einen Klemmverschluss aufweisen, mit dem diese an der Bedeckung angebracht, insbesondere befestigt, sind.

Bilden das Verbindungsmittel und das Gegenverbindungsmittel die Verbindung, deckt die Bedeckung zumindest zwei Seiten des Transportwagens ab, umhüllt diese insbesondere. Werden das Verbindungsmittel und das Gegenverbindungsmittel an den Transportwagen angebracht, ist es möglich, auch einzelne Seiten des Transportwagens zu bedecken.

Vorteilhafte Ausführungsformen sehen vor, dass die Schutzeinrichtung zumindest zwei in Höhenrichtung zueinander beabstandete Verbindungsmittel und/oder Gegenverbindungsmittel aufweist. Dies ermöglicht es, eine verbesserte Anpassung der Schutzeinrichtung an mögliche geometrische Veränderungen des Transportwagens, welche beispielsweise durch eine Variation von in den Transportwagen eingesetzten Böden bedingt sind, auszugleichen. Zudem ist es hierdurch möglich, die Bedeckung über eine in Höhenrichtung verlaufende Höhe verbessert, insbesondere gleichmäßig in Querrichtung, zu spannen. Wirken dabei jeweils ein Verbindungsmittel und ein Gegenverbindungsmittel zum Bilden einer Verbindung zusammen, sind somit mehrere zueinander in Höhenrichtung beabstandete, insbesondere lösbare, Verbindungen vorgesehen, welche die Bedeckung im Montagezustand jeweils im zugehörigen Bereich in Querrichtung spannen.

Das jeweilige Verbindungsmittel und/oder das jeweilige Gegenverbindungsmittel kann prinzipiell beliebig ausgestaltet sein. Bevorzugt sind Verbindungsmittel und/oder Gegenverbindungsmittel derart ausgestaltet, dass ein lösbares Anbringen an den Transportwagen oder eine lösbare Verbindung hergestellt werden kann. Sind das Verbindungsmittel und das Gegenverbindungsmittel zum Anbringen an den Transportwagen vorgesehen, können diese beispielsweise jeweils als ein Haken ausgestaltet sein bzw. einen solchen Haken aufweisen. Hierzu zählen Karabinerhaken, Flachhaken und dergleichen. Vorstellbar ist es, das Verbindungsmittel bzw. das Gegenverbindungsmittel mit einer Schlaufe zu versehen, welche an der Bedeckung angebracht ist. Die Schlaufe kann dabei zum Anbringen am Transportwagen bzw. zum Bilden der Verbindung zum Einsatz kommen. Auch ist es vorstellbar, über die Schlaufe den Haken mit der Bedeckung zu verbinden.

Sind das Verbindungsmittel und das Gegenverbindungsmittel zum Bilden der Verbindung ausgestaltet, kann eines der Mittel einen Haken aufweisen, während das andere Mittel einen Ring oder ein Ringsegment, beispielsweise einen D-Ring aufweist, in den der Haken zum Bilden der Verbindung eingreift. Auch ist es vorstellbar, dass eines der Mittel eine Öse, insbesondere im Bedeckstoff, aufweist oder als eine Öse ausgebildet ist. Denkbar sind auch Varianten, bei denen zumindest eines der Mittel eine Schlaufe aufweist. Alternativ oder zusätzlich kann das jeweilige Mittel ein Klemmverschluss zum kraftschlüssigen Verbinden des Mittels aufweisen.

Vorteilhaft weist die Schutzeinrichtung mehrere in Querrichtung zueinander beabstandete Haltemittel und/oder mehrere in Querrichtung zueinander beabstandete Spannmittel auf. Hierdurch lässt sich die Bedeckung vereinfacht an den Transportwagen anbringen. Zudem kann hierdurch ein verbessertes Spannen der Bedeckung in Höhenrichtung, insbesondere ein gleichmäßigeres Spannen der Bedeckung in Höhenrichtung erzielt werden.

Bevorzugt sind Ausführungsformen, bei denen die Schutzeinrichtung zum jeweiligen Haltemittel ein zugehöriges Spannmittel aufweist, das in Höhenrichtung mit dem zugehörigen Haltemittel fluchtet. Dies vereinfacht das Anbringen der Schutzeinrichtung an den Transportwagen, da in Querrichtung zueinander beabstandete Haltemittel und Spannmittel nacheinander in einfacher Weise an den Transportwagen angebracht werden können. Zudem lässt sich die Bedeckung hierdurch großflächig und/oder gleichmäßig in Höhenrichtung spannen.

Das jeweilige Haltemittel ist vorzugsweise in einem Endbereich, insbesondere in einem Kantenbereich, nachfolgend auch oberer Endbereich bzw. oberer Kantenbereich genannt, an der Bedeckung angebracht. Auch ist es bevorzugt, wenn das jeweilige Spannmittel in einem dem oberen Endbereich in Höhenrichtung gegenüberliegenden unteren Endbereich, insbesondere einem unteren Kantenbereich, der Bedeckung an der Bedeckung angebracht ist. Diese Ausgestaltungen erlauben jeweils eine effiziente Nutzung der Fläche der Bedeckung in Höhenrichtung und/oder das Spannen der Bedeckung über eine größere Höhe der Bedeckung. Dabei kann das jeweilige Haltemittel und/oder das jeweilige Spannmittel den zugehörigen Endbereich bzw. Kantenbereich überragen oder hin zur in Höhenrichtung gegenüberliegenden Kante versetzt angeordnet sein.

Entsprechendes gilt für das jeweilige Verbindungsmittel und/oder das jeweilige Gegenverbindungsmittel, welche vorteilhaft im Bereich eines querendseitigen Endes der Bedeckung, nachfolgend auch Seitenkante genannt, angebracht sind. Das heißt, dass das jeweilige Verbindungsmittel im Bereich einer der Seitenkanten und das jeweilige Gegenverbindungsmittel im Bereich der anderen Seitenkante an der Bedeckung angebracht sind.

Vorstellbar sind Ausführungsformen, bei denen zumindest ein Haltemittel und/oder zumindest ein Spannmittel im Bereich einer der Seitenkanten angeordnet sind/ist.

Denkbar sind Ausführungsformen, bei denen zumindest eines der wenigstens einen Spannmittel mit wenigstens einem der Verbindungsmittel und/oder Gegenverbindungsmittel zusammenwirkt, um, gemeinsam mit dem wenigstens einen Haltemittel, die Bedeckung in Höhenrichtung zu spannen. Dabei kann das Spannmittel nacheinander mit Verbindungsmitteln und/oder Gegenverbindungsmitteln zusammenwirken, welche in Höhenrichtung aufeinanderfolgen. Somit kann über das Spannmittel sowohl ein Spannen der Bedeckung in Höhenrichtung als auch ein Spannen in Querrichtung erfolgen.

Bevorzugt ist es dabei, wenn zumindest eines dieser Verbindungsmittel und/oder Gegenverbindungsmittel in Querrichtung zu zumindest einem der anderen Verbindungsmittel und/oder Gegenverbindungsmittel beabstandet ist. Besonders bevorzugt ist es, wenn zumindest ein Verbindungsmittel und/oder Gegenverbindungsmittel und zumindest ein Verbindungsmittel und/oder Gegenverbindungsmittel im Bereich unterschiedlicher Seitenkanten angeordnet sind. Somit ist die Handhabung der Schutzeinrichtung vereinfacht. Die Schutzeinrichtung lässt sich somit insbesondere vereinfacht am Transportwagen anbringen und die Bedeckung in Höhenrichtung sowie in Querrichtung vereinfacht und effektiv spannen.

Zu denken ist an Ausführungsformen, bei denen im Bereich beider Seitenkanten der Bedeckung in Höhenrichtung zueinander beabstandete Verbindungsmittel und/oder Gegenverbindungsmittel vorgesehen sind. Das Spannmittel wirkt dabei vorzugsweise mit zumindest einem Verbindungsmittel und/oder Gegenverbindungsmittel im Bereich einer der Seitenkanten und mit zumindest einem Verbindungsmittel und/oder Gegenverbindungsmittel im Bereich der anderen Seitenkante zusammen. Dieses Zusammenwirken führt also einerseits zum Spannen der Bedeckung in Höhenrichtung und andererseits zum Spannen der Bedeckung in Querrichtung. Darüber hinaus ist die Bedeckung somit in der Lage, Dimensionsänderungen des Transportwagens verbessert auszugleichen.

Das Zusammenwirken des Spannmittels mit dem zumindest einen Verbindungsmittel und/oder Gegenverbindungsmittel erfolgt vorzugsweise über ein Seil und/oder Gummi, das am Spannmittel, das insbesondere als eine Schlaufe, die um einen Träger des Transportwagens oder um eine Aufnahme des Transportwagens zur Aufnahme eines solchen Trägers geführt sein kann, auch lösbar, angebracht ist, wobei mit dem Gummi wiederrum ein verbesserter Ausgleich der Dimensionsänderungen des Transportwagens möglich ist. Das Spannmittel, insbesondere die Schlaufe, ist vorteilhaft im Kantenbereich, bevorzugt im unteren Endbereich, der Bedeckung angeordnet und sorgt somit für ein Spannen auch des zugehörigen Kantenbereichs. Vorstellbar ist es, dass das Seil und/oder Gummi Bestandteil des Spannmittels sind/ist. Vorteilhaft erfolgt das Zusammenwirken in der Art einer Seilführung und/oder Gummiführung, derart, dass das Seil und/oder Gummi durch diejenigen Verbindungsmittel und/oder Gegenverbindungsmittel geführt ist, mit denen das Spannmittel zusammenwirkt. Dabei sind diese Verbindungsmittel und/oder Gegenverbindungsmittel vorteilhaft als ein Haken oder Karabiner ausgebildet und ermöglichen somit ein vereinfachtes Anbringen des Seils und/oder Gummis an den Verbindungsmitteln und/oder Gegenverbindungsmitteln und eine vereinfachte Führung des Seils und/oder Gummis durch die Verbindungsmittel und/oder Gegenverbindungsmittel. Insgesamt wird also die Handhabung der Schutzeinrichtung sowie das Spannen der Bedeckung in Höhenrichtung und in Querrichtung erheblich vereinfacht. Vorteilhaft verläuft der Seil und/oder Gummi dabei zumindest einmal zwischen den Seitenkanten

Erfindungsgemäß ist eine derartige Anordnung des zumindest einen Haltemittels bzw. des zumindest eines Spannmittels vorgesehen, dass diese jeweils einem Eckbereich des Transportwagens zugeordnet sind. Das heißt, dass das jeweilige Haltemittel bzw. das jeweilige Spannmittel im Montagezustand in einem zugehörigen Eckbereich des Transportwagens angeordnet ist. Unter Eckbereich ist vorliegend nicht nur eine entsprechende Ecke des Transportwagens, sondern auch der an die Ecke in der Umfangsrichtung angrenzende Bereich zu verstehen. Dies führt zu einem vereinfachten Anbringen der Schutzeinrichtung an den Transportwagen. Zudem sind in den Eckbereichen üblicherweise Träger, insbesondere Eckpfosten, des Transportwagens angeordnet, so dass das Anbringen der Schutzeinrichtung sowie das Spannen der Bedeckung vereinfacht erfolgt.

Selbstverständlich sind auch Varianten vorstellbar, bei denen zumindest ein solches Haltemittel und/oder Spannmittel außerhalb der Eckbereiche angeordnet ist.

Denkbar ist es, die Bedeckung im Bereich von zumindest einem Spannmittel und/oder von zumindest einem Haltemittel mit einer Auswölbung zu versehen. Die Auswölbung ist dabei insbesondere vom Transportwagen weggerichtet und vereinfacht das Anbringen des Spannmittels bzw. des Haltemittels am Transportwagen sowie das Spannen der Bedeckung in Höhenrichtung.

Die Schutzeinrichtung kann derart ausgestaltet sein, dass querendseitige Kanten der Bedeckung bzw. die Seitenkanten im Montagezustand zueinander beabstandet sind. Hierdurch ist in der Schutzeinrichtung im Montagezustand ein in Höhenrichtung verlaufender Spalt ausgebildet. Dieser Spalt erlaubt insbesondere einen optischen Zugang in das Innere des Transportwagens, so dass das Transportgut vereinfacht erkannt werden kann. Vorstellbar sind auch Ausführungsformen, bei denen sich die Seitenkanten im Montagezustand überlappen oder zumindest teilweise berühren. Auch ist es denkbar, die Schutzeinrichtung mit mehreren Verbindungsmitteln und/oder Gegenverbindungsmitteln zu versehen, die in Querrichtung und somit in Umfangsrichtung des Transportwagens zueinander beabstandet sind und zum Einsatz kommen können, um wahlweise eine beabstandete oder eine überlappende bzw. sich berührende Anordnung der Seitenkanten zu erlauben.

Die Bedeckung, insbesondere der Bedeckstoff, ist zweckmäßig in Höhenrichtung und/oder Querrichtung elastisch. Somit lässt sich die Bedeckung verbessert spannen. Auch ist es somit möglich, durch den Bedeckstoff an sich ein Spannen der Bedeckung zu erreichen. Darüber hinaus erlaubt es ein solcher Bedeckstoff, geometrisch Änderungen des Transportwagens besser auszugleichen.

Bevorzugte Ausführungsformen sehen vor, dass die Bedeckung, insbesondere der Bedeckstoff, in Höhenrichtung eine größere Elastizität aufweist, als in Querrichtung. Dies erlaubt einen effizienteren und/oder verbesserten Ausgleich von Dimensionsänderungen des Transportwagens, welche insbesondere durch eine unterschiedliche Anzahl der Böden des Transportwagens bedingt sein können, und verstärkt in Umfangsrichtung des Transportwagens auftreten, entlang der die Querrichtung der Bedeckung im Montagezustand verläuft. Wird also ein solcher Boden entfernt, führt dies zu einer Verschiebung der Träger nach Innen und folglich zu einer zumindest lokalen Änderung des Außenumfangs des Transportwagens, welche mit der Elastizität des Bedeckstoff einfach und wirksam ausgeglichen werden kann.

Besonders bevorzugt ist der Bedeckstoff als ein Textil ausgebildet bzw. ein Textil. Somit lässt sich die Bedeckung gewichtsreduziert und in mehrmals verwendbarer Weise, das heißt insbesondere mit einer höheren Lebensdauer, realisieren. Zudem ist die Bedeckung hierdurch atmungsaktiv bzw. zumindest teilweise luftdurchlässig.

Besonders bevorzugt sind Ausführungsformen, bei denen der Bedeckstoff als ein Gewirke ausgebildet ist. Die führt zu einer vorteilhaften mechanischen Stabilität der Bedeckung bei gleichzeitiger Elastizität. Insbesondere kann die Bedeckung hierdurch derart ausgebildet sein, dass sie in Höhenrichtung eine größere Elastizität aufweist als in Querrichtung. Das Gewirke kann dabei beliebig ausgestaltet sein. Insbesondere ist das Gewirke als Kettengewirke, beispielsweise in Form eines "Lochfilets", ausgestaltet.

Bevorzugte Ausführungsformen sehen vor, dass das Verbindungsmittel und/oder das Gegenverbindungsmittel bzw. eine gegebenenfalls durch das Verbindungsmittel und das Gegenverbindungsmittel gebildete Verbindung in Querrichtung elastisch ausgebildet ist. Dies führt zu einem verbesserten Ausgleich von geometrischen Veränderungen des Transportwagens. Zur elastischen Ausbildung ist es vorstellbar, das Verbindungsmittel und/oder das Gegenverbindungsmittel mit einem elastischen Bestandteil, beispielsweise mit einem Gummiband, zu versehen. Alternativ oder zusätzlich ist es vorstellbar, das Verbindungsmittel und/oder das Gegenverbindungsmittel bzw. eine gegebenenfalls durch das Verbindungsmittel und das Gegenverbindungsmittel gebildete Verbindung mit einem Gurtsystem, insbesondere einem Spanngurt, zu versehen oder als ein solches auszubilden. Mit dem Gurtsystem kann zudem das Spannen der Bedeckung, auch nachträglich, geändert, insbesondere erhöht, werden.

Bei vorteilhaften Ausführungsformen ist die Bedeckung, insbesondere der Bedeckstoff, mit Verstärkungen zur mechanischen Stabilisierung bzw. der Verbesserung der mechanischen Stabilität der Bedeckung versehen. Besagte Verstärkungen können insbesondere in Form von einem zusätzlich angebrachten Band und/oder als Materialverstärkung ausgestaltet sein.

Vorteilhaft ist es insbesondere, die Bedeckung im Verbindungsbereich mit den jeweiligen Haltemitteln oder Spannmittel und/oder Verbindungsmittel und/oder Gegenverbindungsmittel mit wenigstens einer entsprechenden Verstärkung zu versehen. Vorstellbar ist es insbesondere, die Bedeckung randseitig umlaufend geschlossen mit zumindest einer Verstärkung zu versehen. Hierdurch ist die Bedeckung also in der Art einer Plane oder als eine Plane ausgebildet.

Bevorzugt ist es ferner, die Bedeckung mit wenigstens einer in Höhenrichtung verlaufenden Verstärkung zu versehen. Bevorzugt sind diese Verstärkungen im Eckbereich des Transportwagens angeordnet und verhindern somit eine Beschädigung der Bedeckung, da in diesen Bereichen erhöhte Belastungen der Bedeckung auftreten. Dabei können die Verstärkungen in Höhenrichtung durchgehend und in Querrichtung beabstandet sein. Auch ist es vorstellbar, derartige Verstärkungen lokal in den Eckbereichen und in Höhenrichtung begrenzt zu versehen.

Die jeweilige Verstärkung kann auf beliebige Weise an den Bedeckstoff angebracht sein. Insbesondere ist es vorstellbar, die Verstärkung an den Bedeckstoff anzunähen.

Vorteilhaft weist die Bedeckung an zumindest einem der in Höhenrichtung endseitigen Kanten, das heißt also an der oberen Kante und/oder an der unteren Kante, einen in Höhenrichtung über einen Teilbereich verlaufenden Schlitz auf. Hierdurch ist es möglich, eine Anpassung der Bedeckung an die geometrischen Gegebenheiten und/oder Änderungen des Transportwagens, vereinfacht vorzunehmen. Vorteilhaft ist der Schlitz dabei randseitig verstärkt. Auch ist es vorstellbar, in Querrichtung gegenüberliegende Schenkel des Schlitzes mit Hilfe eines Verbindungsmittels, beispielsweise eines Bandes, welches elastisch ausgebildet sein kann, miteinander zu verbinden.

Alternativ oder zusätzlich ist es vorstellbar, im oberen Endbereich und/oder im unteren Endbereich der Bedeckung ein Gurtsystem anzubringen, welches variabel einstellbar ist und in unterschiedlichen Stellungen die Ausdehnung der entsprechenden Kante in Querrichtung bzw. Umfangsrichtung verändert. Das Gurtsystem ist dabei vorzugsweise an einer entsprechenden Verstärkung angebracht. Mit dem Gurtsystem ist es zudem insbesondere möglich, das Spannen der Bedeckung, auch nachträglich, zu ändern, insbesondere zu erhöhen.

Die Schutzeinrichtung kann ein Zugsystem aufweisen, welches einen Seilzug mit einem Seil umfasst. Das Zugsystem ermöglicht insbesondere das Verbinden des Verbindungsmittels und/oder des Gegenverbindungsmittels, wenn sich dieses beim am Transportwagen angebrachtem Zustand der Schutzeinrichtung in Höhenrichtung außerhalb der Griffhöhe eines normalen Nutzers, insbesondere oberhalb von 2,00 m, befindet. Das Zugsystem ist derart an der Schutzeinrichtung angebracht, dass es im Montagezustand das Verbindungsmittel und das Gegenverbindungsmittel gegeneinander verspannt. Hierzu kann das Seil am Verbindungsmittel und/oder am Gegenverbindungsmittel angebracht sein. Zudem kann das Zugsystem eine Führung, beispielsweise einen Ring, aufweisen, durch welche das Seil geführt ist.

Die Schutzeinrichtung ist, wie vorstehend erwähnt, zum Bedecken zumindest einer Seite bzw. Außenseite des Transportwagens vorgesehen. Durch eine entsprechende Anpassung der Schutzeinrichtung, insbesondere der Abmessungen, ist es dabei möglich, die Schutzeinrichtung bei Transportwagen unterschiedlicher Größe und/oder zum Bedecken von unterschiedlichen Seiten desselben Transportwagens einzusetzen. Vorstellbar ist es auch, mehrere solche Schutzeinrichtungen unterschiedlicher Dimensionierung bereitzustellen, mit denen der Transportwagen wahlweise abgedeckt werden kann. Insbesondere ist es hierdurch möglich, unterschiedliche Seiten das Transportwagens und/oder zumindest eine Seite des Transportwagens in unterschiedlichen Höhen, abzudecken. Insofern betrifft die vorliegende Erfindung auch ein Baukastensystem, in dem zumindest zwei Schutzeinrichtungen bereitgestellt werden, welche sich durch ihre Abmessungen, das heißt durch ihre in Höhenrichtung verlaufenden Höhen und/oder ihre in Querrichtung verlaufenden Breiten unterscheiden.

Der Transportwagen weist vorzugsweise mehrere Träger auf, die in der Art von Eckpfosten angeordnet sind und jeweils Bestandteil eines Rahmengestells sein können. Die Träger sind in Umfangsrichtung zueinander beabstandet und verlaufen in Höhenrichtung. **In** Umfangsrichtung aufeinander folgende Träger definieren dabei die Außenseite bzw. Außenseiten des Transportwagens. Dementsprechend bildet der jeweilige Träger eine Ecke des Transportwagens oder ist zumindest in einem Eckbereich angeordnet. Der jeweilige Träger kann an einem in Höhenrichtung unteren Basisboden des Transportwagens angebracht sein, wobei der Basisboden als ein Chassis des Transportwagens ausgestaltet oder Teil des Chassis sein kann. Auf der von den Trägern abgewandten Seite des Basisbodens können Transportmittel, beispielsweise Rollen oder Räder angebracht sein, welche einen Transport des Transportwagens ermöglichen.

Die Träger dienen insbesondere dem Halten von Böden des Transportwagens, die in Höhenrichtung zueinander beabstandet sind und dem Tragen und Transportieren von Transportgut, insbesondere von Pflanzen und dergleichen, beispielsweise Blumen, dienen. Hierzu kann der jeweilige Träger als ein Hohlkörper oder ein Profil mit in Höhenrichtung zueinander beabstandeten Aufnahmen ausgebildet sein, wobei die jeweilige Aufnahme einen der Böden, insbesondere eckseitig, aufnehmen und somit halten kann. Vorstellbar ist es auch, den Transportwagen mit in Umfangsrichtung benachbarten Gitterelementen zu versehen, wobei die Böden von den Gitterelementen gehalten werden. Bevorzugt ist es, wenn die Böden lösbar im Transportwagen eingesetzt werden können. Vorteilhaft ist es zudem, wenn der jeweilige Boden alternativ oder zusätzlich in unterschiedlichen Höhen im Transportwagen angebracht werden kann. Somit ist es möglich, den Transportwagen variabel mit einer unterschiedlichen Anzahl von Böden zu bestücken.

Bevorzugt ist das zumindest eine Haltemittel derart ausgestaltet und/oder angeordnet, dass es zum Anbringen der Bedeckung an den Transportwagen mit einem solchen Träger zusammenwirkt. Beispielsweise kann das Haltemittel mit einer solchen Aufnahme zusammenwirken, insbesondere darin eingehängt werden. Somit bildet die Aufnahme die obere Struktur des Transportwagens für das zugehörige Haltemittel.

Vorteilhaft ist es, wenn das zumindest eine Spannmittel mit einem basisbodenseitigen Ende des Transportwagens zusammenwirkt. Insbesondere ist es vorstellbar, dass zumindest eines der Spannmittel mit einem basisbodenseitigen Ende eines der Träger zusammenwirkt. Das heißt, dass das besagte basisbodenseitige Ende des Trägers die untere Struktur des Trägers für das Spannmittel bildet. Eine solche untere Struktur kann insbesondere durch eine vom Basisboden auf der von den Trägern abstehende Rippe gebildet sein.

Vorstellbar ist es, in der Bedeckung, insbesondere im Bedeckstoff, einen sich in Höhenrichtung über einen Teilbereich erstreckenden Schlitz einzubringen. Der jeweilige Schlitz kann dabei derart angeordnet sein, dass er einen Zugriff auf den Transportwagen durch die Schutzeinrichtung hindurch, insbesondere ein Greifen von zumindest einem der Träger, ermöglicht. Alternativ ist es vorstellbar, einen solchen Schlitz zur Fixierung beziehungsweise Festlegung des Transportwagens, beispielsweise in einem Fahrzeug einzusetzen. Hierzu ist es insbesondere vorstellbar, dass durch einen solchen Schlitz ein Fixierungsmittel, das einen Haken aufweist, durchgeführt werden kann, welche den Transportwagen in einem entsprechenden Kraftfahrzeug fixiert und sichert.

Der Bedeckstoff weist vorzugsweise ein geringes Gewicht auf. Insbesondere ist der Bedeckstoff, beispielsweise das Textil, insbesondere das Gewirke, mit einer Gewichtsdichte von 100 bis 500 Gramm pro Quadratmeter, besonders bevorzugt zwischen 105 und 115 Gramm pro Quadratmeter ausgebildet bzw. hergestellt. Bevorzugt ist der Bedeckstoff bedruckbar. Hierzu kann der Bedeckstoff aus Kunststoff, insbesondere aus Polymer, insbesondere aus Polyester, hergestellt sein. Hierdurch lässt sich der Bedeckstoff individualisieren, Dabei kann zum Bedrucken insbesondere ein Sublimations- oder Direktdruckverfahren zum Einsatz kommen.

Vorstellbar ist es, an der Schutzeinrichtung ein maschinenlesbares Identifikationsmittel anzubringen, derart, dass die jeweilige Schutzeinrichtung durch eine externe Vorrichtung maschinell registrierbar ist. Das Indentifikationmittel kann ein Chip, ein Code, beispielsweise ein QR-Code, und dergleichen sein.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine isometrische Ansicht eines Transportwagens einer Anordnung,
- Fig. 2: eine Vorderansicht einer Schutzeinrichtung der Anordnung bei gestrafftem Zustand einer Bedeckung der Schutzeinrichtung,
- Fig. 3: eine Detailansicht der Bedeckung,
- Fig. 4: eine isometrische Ansicht der Anordnung mit dem Transportwagen und der Schutzeinrichtung bei am Transportwagen angebrachten Zustand und bei einem anderen Ausführungsbeispiel der Schutzeinrichtung,
- Fig. 5: eine isometrische Ansicht der Anordnung bei am Transportwagen montiertem Zustand der Schutzeinrichtung,
- Fig. 5a: eine isometrische Teilansicht der Anordnung aus Fig. 5,
- Fig. 6: eine isometrische Vorderansicht auf einen Teil der Schutzeinrichtung aus Fig. 2 bei einem anderen teilweise gefalteten Zustand der Bedeckung,
- Fig. 7: eine isometrische Teilansicht auf eine Vorderseite der Schutzeinrichtung bei einem weiteren Ausführungsbeispiel und gestraffter Bedeckung,
- Fig. 8: eine isometrische Teilansicht auf die Vorderseite der Schutzrichtung bei einem anderen Ausführungsbeispiel,
- Fig. 9: eine isometrische Teilansicht auf eine Rückseite der Schutzeinrichtung bei einem anderen Ausführungsbeispiel,
- Fig. 10: die Ansicht aus Fig. 2 bei einem anderen Ausführungsbeispiel der Schutzeinrichtung,
- Fig. 11: die Ansicht aus Fig. 2 bei einem weiteren Ausführungsbeispiel der Schutzeinrichtung,
- Fig. 12: die Ansicht aus Fig. 2 bei einem anderen Ausführungsbeispiel der Schutzeinrichtung,
- Fig. 13: eine isometrische Teilansicht der Anordnung mit Schutzeinrichtung aus Fig. 12,
- Fig. 14: eine isometrische Teilansicht der Anordnung bei einem weiteren Ausführungsbeispiel der Schutzeinrichtung,
- Fig. 15: eine Detailansicht der Anordnung aus Fig. 14,
- Fig. 16: eine Seitenansicht eines Seilzugs der Schutzeinrichtung aus Fig. 14,
- Fig. 17: eine isometrische Ansicht des Transportwagens mit einer Halteeinrichtung,
- Fig. 18: eine Draufsicht auf die Halteeinrichtung,
- Fig. 19: eine Seitenansicht der Halteeinrichtung.

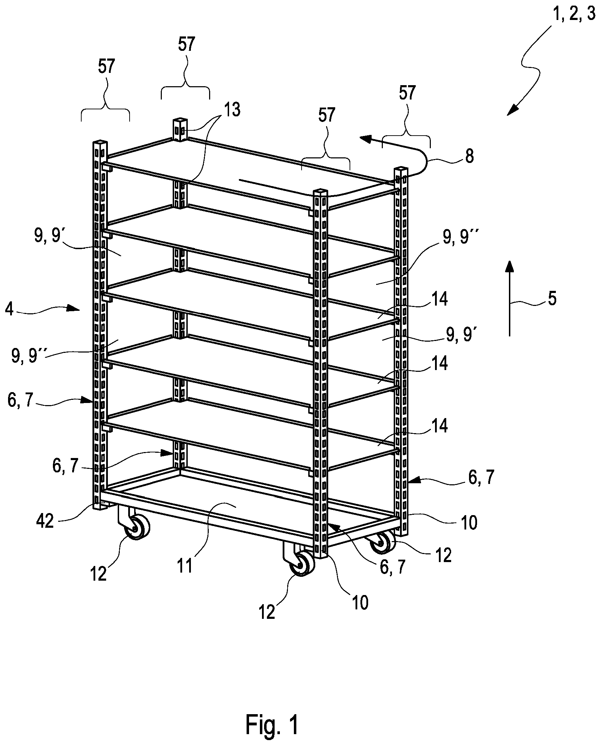

Ein Transportwagen 1, wie er beispielsweise in Fig. 1 dargestellt ist, dient dem Transport von nicht dargestelltem Transportgut. Der Transportwagen 1 ist insbesondere als Pflanzentransportwagen 2 ausgestaltet, der zum Transport von nicht gezeigten Pflanzen, beispielsweise Blumen und dergleichen, als Transportgut zum Einsatz kommt. Der Transportwagen 1 ist rein beispielhaft als ein sogenannter CC-Container 3 ausgebildet. Der Transportwagen 1 weist ein Rahmengestell 4 auf, welches mehrere entlang einer Höhenrichtung 5 verlaufende Träger 6 in Form von Eckpfosten oder Profilen 7 aufweist. Die Träger 6 sind in einer Umfangsrichtung 8 des Transportwagens 1 zueinander beabstandet und nacheinander angeordnet, derart dass sie vier Außenseiten 9 des Transportwagens 1 definieren, welche in Umfangsrichtung 8 aufeinanderfolgen, wobei der jeweilige Träger 6 eine Ecke 10 von zwei in Umfangsrichtung 8 aufeinanderfolgenden Außenseiten 9 oder kurz Seiten 9 definiert und somit in einem entsprechenden Eckbereich 57 des Transportwagens 1 angeordnet ist, der sich in Höhenrichtung 5 erstreckt. Der Transportwagen 1 weist einen in Höhenrichtung 5 unteren Basisboden 11 auf, der rechteckförmig ausgebildet ist, wobei der jeweilige Träger 6 in einer Basisbodenecke des Basisbodens 11 aufgenommen ist. Dementsprechend sind die Träger 6 in einer Draufsicht entlang der Höhenrichtung 5 an den Ecken eines Rechtecks angeordnet. Der Basisboden 11 weist dabei lange Seiten und kurze Seiten auf, so dass jeweils zwei gegenüberliegende Außenseiten 9 kleiner sind als die anderen beiden gegenüberliegenden Außenseiten 9. Die kleinen Außenseiten 9 werden nachfolgend auch als kleine Außenseiten 9' oder kleine Seiten 9' bezeichnet, während die großen Außenseiten 9 auch als große Außenseiten 9" oder große Seiten 9" bezeichnet werden. Auf der von den Trägern 6 abgewandten Seite des Basisbodens 11 sind Rollen 12 angebracht, so dass der Transportwagen 1 leicht bewegt werden kann. Dementsprechend ist der Basisboden 11 zugleich ein Chassis des Transportwagens 1. Der jeweilige Träger 6 ist mit einer Vielzahl von in Höhenrichtung 5 zueinander beabstandeten Aufnahmen 13 versehen. Die Aufnahmen 13 dienen dem Zweck, Böden 14 des Transportwagens 1 lösbar in den Transportwagen 1 einzusetzen, derart, dass der jeweilige Boden 14 an die Träger 6 angebracht und wieder davon gelöst werden kann. Die Böden 14 werden also von den Trägern 6 getragen. Der jeweilige Boden 14, insbesondere auch der Basisboden 11, dient zur Ablage des Transportguts, beispielsweise von Pflanzen, welches mit dem Transportwagen 1 transportiert wird.

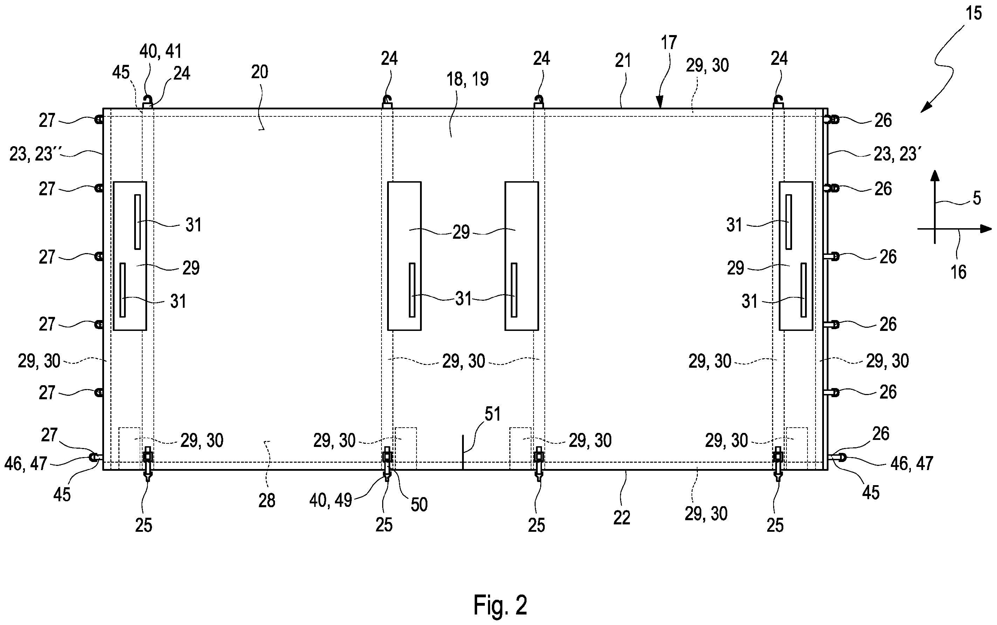

Zur äußerlichen beziehungsweise seitlichen Bedeckung des Transportwagens 1, d. h. zum Bedecken oder Abdecken wenigstens einer der Außenseiten 9 des Transportwagens 1, kommt eine Schutzeinrichtung 15 zum Einsatz, wie sie beispielsweise in Fig. 2 zu sehen ist. Die Schutzeinrichtung 15 dient insbesondere dem Zweck einer Sicherung und/oder dem Schutz des Transportguts während des Transports und/oder dem Schutz des Transportwagens 1. Eine solche Schutzeinrichtung 15, wie sie in Fig. 2 gezeigt ist, erstreckt sich in Höhenrichtung 5 und einer quer zu Höhenrichtung 5 verlaufenden Querrichtung 16. Die Schutzeinrichtung 15 weist eine flächige Bedeckung 17 aus einem Bedeckstoff 18, der vorzugsweise ein Textil 19 ist, auf. Der Bedeckstoff 18 ist derart gewählt, dass er sich in der Art eines Tuches verformen, insbesondere falten und straffen, lässt. Dabei ist in Fig. 2 ein gestraffter Zustand der Bedeckung 17 gezeigt wobei eine Vorderseite 20 der Bedeckung 17 zu sehen ist. In diesem Zustand weist die Bedeckung 17 eine rechteckige Form auf, die in Höhenrichtung 5 eine Oberkante 21 und eine gegenüberliegende Unterkante 22 aufweist, welche jeweils in Querrichtung 16 verlaufen. In Querrichtung 16 weist die Bedeckung 17 gegenüberliegende und in Höhenrichtung 5 verlaufende Seitenkanten 23 auf. Im Bereich der Oberkante 21 ist zumindest ein Haltemittel 24 der Schutzeinrichtung 15 an der Bedeckung 17 angebracht. Im gezeigten Beispiel sind vier solche Haltemittel 24 vorgesehen, die in Querrichtung 16 zueinander beabstandet sind, derart, dass dem jeweiligen Eckbereich 57 des Transportwagens 1 eines der Haltemittel 24 zugeordnet ist. Im Bereich der Unterkante 22 ist zumindest ein Spannmittel 25 der Schutzeinrichtung 15 an der Bedeckung 17 angebracht. Im gezeigten Beispiel sind vier solche Spannmittel 25 vorgesehen, wobei dem jeweiligen Eckbereich 57 des Transportwagens 1 eines der Spannmittel 25 zugeordnet ist. Im Bereich einer der Seitenkanten 23, nachfolgend auch erste Seitenkante 23' genannt, ist zumindest ein Verbindungsmittel 26 und im Bereich der anderen Seitenkante 23, nachfolgend auch zweite Seitenkante 23" genannt, zumindest ein Gegenverbindungsmittel 27 an der Bedeckung 17 angebracht. Im gezeigten Beispiel sind im Bereich der ersten Seitenkante 23' sechs in Höhenrichtung 5 zueinander beabstandete Verbindungsmittel 26 und im Bereich der zweiten Seitenkante 23" sechs in Höhenrichtung 5 zueinander beabstandete Gegenverbindungsmittel 27 vorgesehen, wobei jeweils ein Verbindungsmittel 26 mit einem zugehörigen Gegenverbindungsmittel 27 in Querrichtung 16 fluchtet. In diesem Beispiel weisen die Haltemittel 24 jeweils einen Haken 40, insbesondere einen Karabinerhaken 41, sowie eine nicht sichtbare Schlaufe 45 auf, mit der der Haken 40 mit der Bedeckung 17 verbunden, insbesondere daran fixiert ist. Das jeweilige Spannmittel 25 weist ebenfalls einen Haken 40, insbesondere einen Flachhaken 49, sowie ein Gurtsystem 50 auf, mit dem der Haken 40 mit der Bedeckung 17 verbunden, insbesondere daran fixiert ist, wobei sich das Gurtsystem 50 in Höhenrichtung 5 verstellen lässt. In diesem Beispiel weisen die Verbindungsmittel 26 und die Gegenverbindungsmittel 27 jeweils einen Ring 46, insbesondere einen D-Ring 47, sowie eine Schlaufe 45 auf, mit der der Ring 46 mit der Bedeckung 17 verbunden, insbesondere daran fixiert ist. Zudem kann an dem jeweiligen Ring 46 ein nicht gezeigter Haken 40 des Verbindungsmittels 26 bzw. Gegenverbindungsmittels 27 angebracht sein.

An einer von der Vorderseite 20 abgewandten Rückseite 28 der Bedeckung 17 sind an der Oberkante 21 und der Unterkante 22 entlang verlaufende Verstärkungen 29, beispielsweise in Form eines an der Bedeckung 17 angebrachten, insbesondere angenähten, Bandes 30, angebracht. Dabei sind die Haltemittel 24 und die Spannmittel 25 im Bereich dieser Verstärkungen 29, 30 an der Bedeckung 17 angebracht, insbesondere an den Verstärkungen 29 fixiert. Zudem ist an den Seitenkanten 23 jeweils eine entlang der zugehörigen Seitenkante 23 verlaufende Verstärkung 29 angebracht, wobei die Verbindungsmittel 26 und die Gegenverbindungsmittel 27 im Bereich der Verstärkungen 29, insbesondere an den Verstärkungen 29, angebracht, beispielsweise fixiert sind. Aufgrund der Anordnung der Verstärkungen 29 auf der Rückseite 28 sind diese in Fig. 2 gestrichelt dargestellt. Zu erkennen ist ferner, dass im Bereich der Haltemittel 24 weitere, sich in Höhenrichtung 5 im Wesentlichen durchgehend erstreckende Verstärkungen 29 vorgesehen sind. Diese Verstärkungen 29 korrespondieren also mit den Eckbereichen 57 des Transportwagens 1, sind vorzugsweise in Umfangsrichtung 8 versetzt zu der entsprechenden Ecke 10 angeordnet. Zu sehen ist ferner, dass im Bereich der Spannmittel 25 weitere, in Höhenrichtung 5 begrenzte Verstärkungen 29 vorgesehen sind, die in Querrichtung 16 den Spannmitteln 25 benachbart angeordnet sind. Beim in Fig. 2 gezeigten Ausführungsbeispiel sind in der Bedeckung 17 in Höhenrichtung 5 etwa mittig mehrere in Höhenrichtung 5 begrenzte Schlitze 31 vorgesehen, welche den Eckbereichen 57 des Transportwagens 1 zugeordnet sind. Die Schlitze 31 sind jeweils von Verstärkungen 29 umgeben, um insbesondere eine weitere Vergrößerung der Schlitze 31 zu verhindern. Dabei sind im Bereich der Seitenkanten 23 jeweils zwei in Höhenrichtung 5 und Querrichtung 16 zueinander versetzte Schlitze 31 vorgesehen. Die Schlitze 31 ermöglichen jeweils einen Zugriff auf den zugehörigen Träger 6 und/oder erlauben das Durchführen eines nicht gezeigten Sicherungsmittels, beispielsweise eines Hakens, zum Fixieren des Transportwagens 1 in einem nicht gezeigten Fahrzeug. Diese Schlitze 31 werden nachfolgend auch als Zugriffsschlitze 31 bezeichnet.

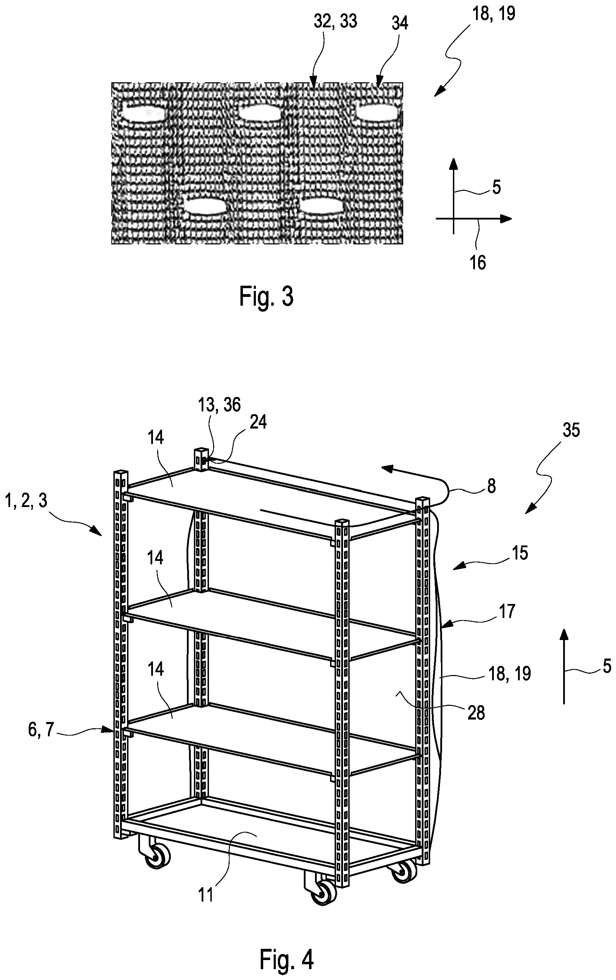

In Fig. 3 ist eine Detailansicht des Bedeckstoffes 18, der als Textil 19 ausgebildet ist, zu sehen. Zu erkennen ist, dass der Bedeckstoff 18 als ein Gewirke 32, insbesondere als ein Kettengewirke 33, ausgestaltet ist und in der Form eines Lochfilets 34 ausgebildet ist. Zu erkennen ist, dass die Bedeckung 17 somit atmungsaktiv und optisch teilweise transparent ist. Zudem weist die Bedeckung 17 hierdurch ein geringes Gewicht beziehungsweise eine geringe Gewichtsdichte, beispielsweise zwischen 100 und 115 Gramm pro Quadratmeter, auf und ist zugleich mechanisch ausreichend belastbar, so dass eine ausreichende Sicherung des Transportguts beim Transport erreicht ist. Das Gewirke 32 ist dabei derart ausgestaltet, dass das Textil 19 und somit die Bedeckung 17 in Höhenrichtung 5 eine größere Elastizität aufweist als in Querrichtung 16.

Fig. 4 zeigt eine Anordnung 35 mit dem Transportwagen 1 und der Schutzeinrichtung 15 bei einem anderen Ausführungsbeispiel der Schutzeinrichtung 15, das sich von der in Fig. 2 Gezeigten insbesondere durch das Fehlen der Schlitze 31 unterscheidet. Zudem sind die Gegenverbindungsmittel 27 unterschiedlich ausgebildet und weisen einen Haken 40 auf. Im gezeigten Beispiel sind im Gegensatz zu dem in Fig. 1 gezeigten Beispiel im Transportwagen 1 lediglich drei Böden 14 angeordnet. Dabei ist ein am Transportwagen 1 angebrachter Zustand der Schutzeinrichtung 15 zu sehen. In diesem Zustand ist zumindest eines der Haltemittel 24 am Transportwagen 1 angebracht, derart, dass die Schutzeinrichtung 15 am Transportwagen 1 gehalten ist. Demgegenüber sind die Verbindungsmittel 26 und die Gegenverbindungsmittel 27 nicht angebracht, so dass ein geöffneter Zustand der Schutzeinrichtung 15 zu sehen ist. Im gezeigten Beispiel wird das jeweilige Haltemittel 24 an einer in Höhenrichtung 5 obersten Aufnahme 13 eines zugehörigen Trägers 6 formflüssig und lösbar angebracht, so dass die entsprechende Aufnahme 13 eine obere Struktur 36 des Transportwagens 1 für das zugehörige Haltemittel 24 bildet, welche mit dem zugehörigen Haltemittel 24 lösbar, insbesondere formflüssig, zusammenwirkt. Vorstellbar sind selbstverständlich auch Ausführungsformen, bei denen die Haltemittel 24 an anderen oberen Strukturen 36 angebracht werden.

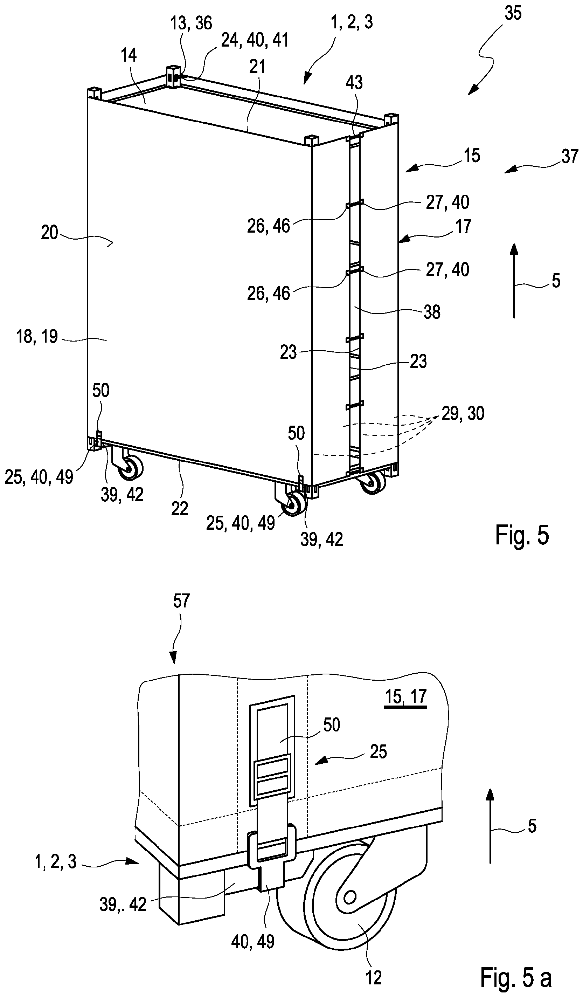

In Fig. 5 ist ein Montagezustand 37 der Schutzeinrichtung 15 gezeigt, wobei im Montagezustand 37 sämtliche Haltemittel 24 und Spannmittel 25 am Transportwagen 1 angebracht sind und die Bedeckung 17 somit in Höhenrichtung 5 spannen, während die Verbindungsmittel 26 und die Gegenverbindungsmittel 27 die Bedeckung 17 in Querrichtung 16, welche der Umfangsrichtung 8 entspricht, spannen. Fig. 5a zeigt eine andere isometrische Ansicht der Anordnung 35 aus Fig. 5 im Bereich einer der Eckbereiche 57 und dem Basisboden 11. Im gezeigten Beispiel wird der Transportwagen 1 von der Schutzeinrichtung 15 in Umfangsrichtung 8 im Wesentlichen gänzlich umhüllt, derart, dass drei der Außenseiten 9 von der Schutzeinrichtung 15 im Wesentlichen bedeckt sind. Die Seitenkanten 23 der Bedeckung 17 verlaufen im Bereich einer der Außenseiten 9, in diesem Beispiel im Bereich einer der kleineren Außenseiten 9', mittig und sind zueinander beabstandet, so dass hierdurch ein in Höhenrichtung 5 verlaufender Spalt 38 ausgebildet ist, der einen optischen Zugang in das Innere des Transportwagens 1 erlaubt.

Das Spannen der Bedeckung 17 in Höhenrichtung 5 wird dadurch erreicht, dass einerseits das jeweilige Haltemittel 24 mit der zugehörigen oberen Struktur 36 und das jeweilige Spannmittel 25 mit einer in Höhenrichtung 5 zur oberen Struktur 36 hin zum Basisboden 11 versetzten unteren Struktur 39 des Transportwagens 1 zusammenwirkt. Im Ergebnis ist im gezeigten Beispiel entlang des jeweiligen Trägers 6 ein Haltemittel 24 vorgesehen. Im jeweiligen Eckbereich 57 ist zudem eine auf der von den Trägern 6 abgewandten Seite des Basisbodens 11 abstehende Rippe 42 ausgebildet, die als untere Struktur 39 dient und mit dem das zugehörige Spannmittel 25 zusammenwirkt.

Im gezeigten Beispiel wirken jeweils ein Verbindungsmittel 26 und ein Gegenverbindungsmittel 27 zum Spannen der Bedeckung 17 in Querrichtung 16 und somit in Umfangsrichtung 8 zusammen. Hierzu bilden jeweils ein Verbindungsmittel 26 und ein Gegenverbindungsmittel 27 eine, insbesondere formschlüssige, lösbare Verbindung 43, wobei die jeweilige Verbindung 43 die Bedeckung 17 in Querrichtung 16 der Schutzeinrichtung 15, welche im Montagezustand 37 der Umfangsrichtung 8 entspricht, spannt. Dabei sind insgesamt sechs in Höhenrichtung 5 zueinander beabstandete, Verbindungen 43 vorgesehen. Die jeweilige Verbindung 43 wird dadurch gebildet, dass der Haken 40 des jeweiligen Gegenverbindungsmittels 27 in den Ring 46 des Verbindungsmittels 26 greift. Das Spannen der Bedeckung 17 in Höhenrichtung 5 und in Querrichtung 16 beziehungsweise in Umfangsrichtung 8 führt zu einem stabilen und zuverlässigen Bedecken des Transportwagens 1 und zu einem stabilen sowie zuverlässigen Sichern des mit dem Transportwagen 1 transportierten Transportguts, insbesondere von Pflanzen. Dies gilt auch bei geometrischen Veränderungen, insbesondere bei lokalen Umfangsänderungen des Transportwagens 1, welche auftreten können, wenn zumindest einer der Böden 14 des Transportwagens 1 entfernt wird.

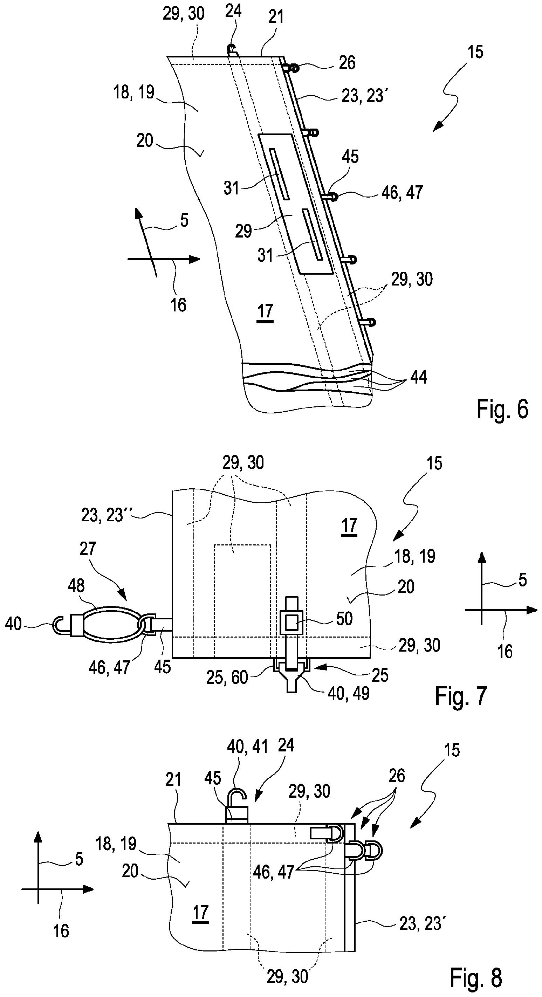

In Fig. 6 ist das in Fig. 2 gezeigte Ausführungsbeispiel der Schutzeinrichtung 15 zu sehen, wobei in Fig. 6 eine isometrische Ansicht auf die Vorderseite 20 der Bedeckung 17 im Bereich der ersten Seitenkante 23' mit den Verbindungsmitteln 26 zu sehen ist. Hierbei ist die Bedeckung 17 nicht gänzlich in einem gestrafften Zustand gezeigt, wobei ein Zustand zu sehen ist, in dem die Bedeckung 17 einzelne Falten 44 aufweist bzw. wirft.

Fig. 7 zeigt eine isometrische Teilansicht der Schutzeinrichtung 15 bei einem weiteren Ausführungsbeispiel im Bereich der Seitenkante 23 mit den Gegenverbindungsmitteln 27 beziehungsweise der zweiten Seitenkante 23". Zu erkennen ist insbesondere, dass das sichtbare Gegenverbindungsmittel 27, wie das Verbindungsmittel 26, eine Schlaufe 45 und einen Ring 46, insbesondere einen D-Ring 47, aufweist. An den Ring 46 ist zusätzlich über einen Gummizug 48 ein Haken 40 angebracht, der zum Herstellen der zugehörigen Verbindung 43 in den Ring 46 des zugehörigen Verbindungsmittels 26 greift. Dies entspricht auch der Ausgestaltung der Gegenverbindungsmittel 27 beim in den Fig. 4 und 5 gezeigten Beispiel. Hierdurch ist einerseits ein einfaches Herstellen der Verbindung 43 gewährleistet. Zudem ist die Verbindung 43 in Querrichtung 16 beziehungsweise Umfangsrichtung 8 elastisch, so dass wiederum ein verbesserter Ausgleich von Dimensionsänderungen des Transportwagens 1, insbesondere in Umfangsrichtung 8, erfolgt.

In Fig. 7 sind zudem zwei Varianten des Spannmittels 25 zu sehen, welche gemeinsam oder alternativ vorliegen können. Bei der ersten Variante ist das Spannmittel 25, wie in den in den Fig. 2, 4 und 5 gezeigten Beispielen, mit einem Haken 40, insbesondere einem Flachhaken 49, vorzugsweise aus Metall, ausgestattet, der über das Gurtsystem 50 des Spannmittels 25 an der Bedeckung 17 angebracht ist, wobei das Anbringen des Spannmittels 25 an der Bedeckung 17 an einem mit einer Verstärkung 29 versehenen Bereich der Bedeckung 17 erfolgt. Somit lässt sich die Position des Hakens 40 in Höhenrichtung 5 variieren, so dass ein vereinfachtes Anbringen an den Transportwagen 1 und/oder ein vereinfachter Ausgleich von Fertigungstoleranzen in Höhenrichtung 5 möglich ist. Zudem lässt sich der Haken 40 somit vereinfacht austauschen. Bei der anderen Variante ist das Spannmittel 25 als eine Schlaufe 60 ausgestaltet, die mit der unteren Struktur 39 des Transportwagens 1, insbesondere formflüssig, lösbar zusammenwirkt und nachfolgend als Verbindungsschlaufe 60 bezeichnet wird

Fig. 8 zeigt eine isometrische Teilansicht der Schutzeinrichtung 15 bei einem weiteren Ausführungsbeispiel, wobei eine Vorderansicht der Schutzeinrichtung 15 im Bereich der Oberkante 21 und der Seitenkante 23 mit dem zumindest einen Verbindungsmittel 26 dargestellt ist. Zu sehen ist eines der Haltemittel 24, welches, wie im den Beispielen der Fig. 2, 4 und 5, einen Haken 40, insbesondere einen Karabinerhaken 41, aufweist, der über eine Schlaufe 45 des Haltemittels 24 an der Bedeckung 17 angebracht ist.

Bei diesem Beispiel sind ferner im Bereich der sichtbaren Seitenkante 23, 23' drei zueinander in Querrichtung 16 versetzte Verbindungsmittel 26 vorgesehen. Das heißt, dass das jeweilige Verbindungsmittel 26 mit dem gleichen Gegenverbindungsmittel 27 zusammenwirken kann. Dies führt zu einer erhöhten Variabilität der Schutzeinrichtung 15 in Querrichtung 16 beziehungsweise in Umfangsrichtung 8, so dass insbesondere Änderungen des Transportwagens 1 in Umfangsrichtung 8 verbessert ausgeglichen werden können. Einer der drei Verbindungsmitteln 26 ist zudem in Höhenrichtung 5 versetzt zu den beiden anderen angeordnet, wodurch entsprechende Änderungen des Transportwagens in Höhenrichtung 5 verbessert ausgeglichen werden können.

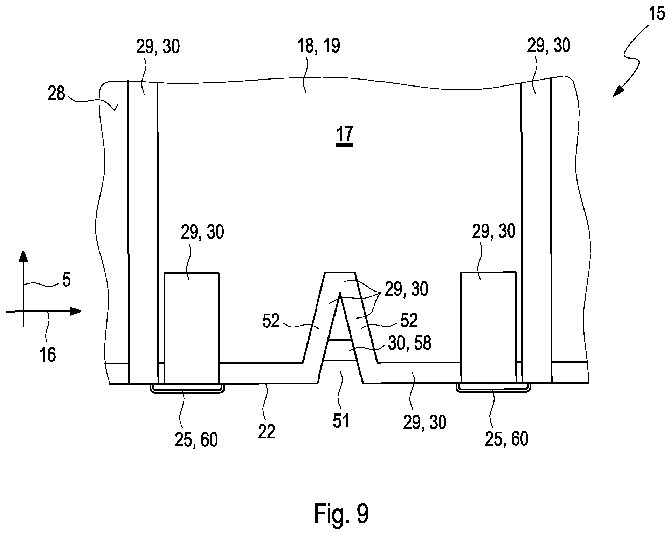

Ein weiteres Ausführungsbeispiel der Schutzeinrichtung 15 ist in Fig. 9 zu sehen, wobei die Rückseite 28 der Schutzeinrichtung 15 zu sehen ist. Bei diesem Ausführungsbeispiel ist, wie im Ausführungsbeispiel der Fig. 2, an der Unterkante 22 und in Querrichtung 16 im Wesentlichen mittig ein Schlitz 51 eingebracht, der sich in Höhenrichtung 5 erstreckt und begrenzt ist. In Fig. 9 ist dabei ein Zustand zu sehen, in dem der Schlitz 51 in Querrichtung 16 auseinander gezogen oder gespreizt ist. Mit diesem Schlitz 51 wird eine erhöhte Flexibilität der Bedeckung 17 im Bereich der Unterkante 22 erzielt, um insbesondere erhöhte Kräfte aufnehmen zu können und/oder eine verbesserte Anpassung an geometrischen Änderungen des Transportwagens 1 zu erzielen. Dementsprechend tritt der gespreizte Zustand des Schlitzes 51, der nachfolgend auch als Ausgleichsschlitz 51 bezeichnet wird, insbesondere im Montagezustand 37 auf. Der Ausgleichsschlitz 51 ist randseitig mit Verstärkungen 29 versehen, um eine weitere Ausbreitung des Schlitzes 51 zu verhindern. Bei diesem Beispiel sind ferner gegenüberliegende Schenkel 52 des Ausgleichsschlitzes 51 durch einen Verstärkungsabschnitt 58, der insbesondere als ein Band 30 ausgebildet sein kann, miteinander verbunden, um den Ausgleichsschlitz 51 weiter zu stabilisieren.

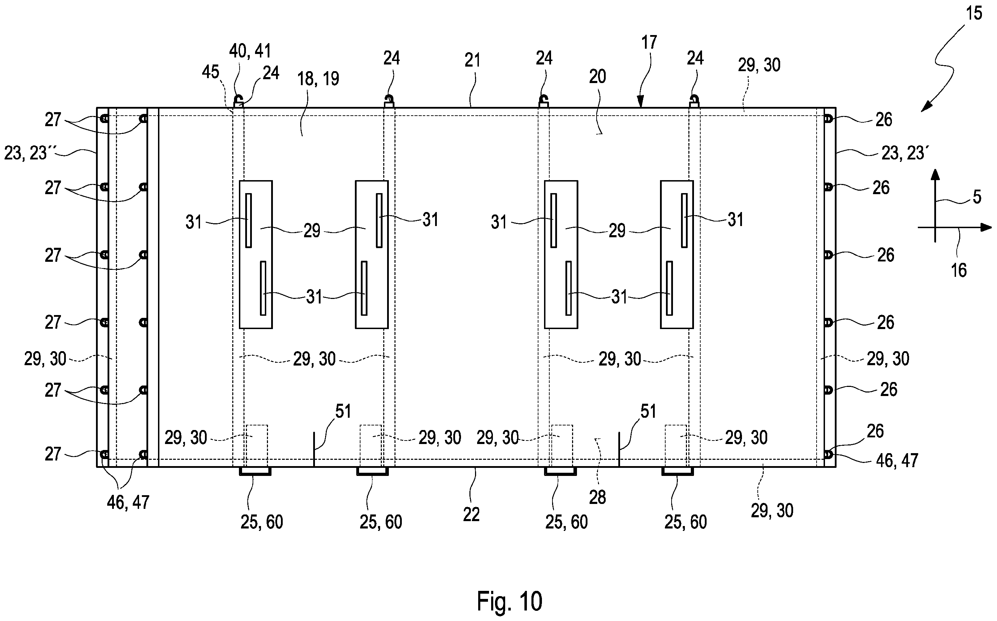

In Fig. 10 ist ein weiteres Ausführungsbeispiel der Schutzeinrichtung 15 zu sehen. Dieses Ausführungsbeispiel unterscheidet sich vom Beispiel in Fig. 2 insbesondere dadurch, dass die Verbindungsmittel 26 und die Gegenverbindungsmittel 27 im Bereich einer der großen Seiten 9" verbunden werden, so dass die Seitenkanten 23 im Bereich einer der großen Seiten 9" angeordnet sind. Dies ergibt sich insbesondere durch den Abstand der Haltemittel 24 und Spannmittel 25 zu den Seitenkanten 23 in Querrichtung 16. Zudem sind beim gezeigten Beispiel die Spannmittel 25 jeweils als eine Schlaufe 60 bzw. Verbindungsschlaufe 60, in der in Fig. 7 gezeigten Art, ausgebildet. Ferner sind in der Unterkante 22 zwei Ausgleichsschlitze 51 eigebracht. Ein weiterer Unterschied besteht darin, dass zwei in Höhenrichtung 5 verlaufende und zueinander in Querrichtung 16 beabstandete Reihen von Gegenverbindungsmitteln 27 vorgesehen sind, so dass im Montagezustand 37 ein Abstand zwischen den Seitenkanten 23 variiert, insbesondere der Spalt 38 minimiert, werden kann. Insbesondere kann hierzu ein Gummizug 48 an einem Gegenverbindungsmittel 27 einer der Reihen angebracht, durch den Ring 46 des zugehörigen Verbindungsmittels 26 geführt und am benachbarten Gegenverbindungsmittel 27 der anderen Reihe angebracht werden.

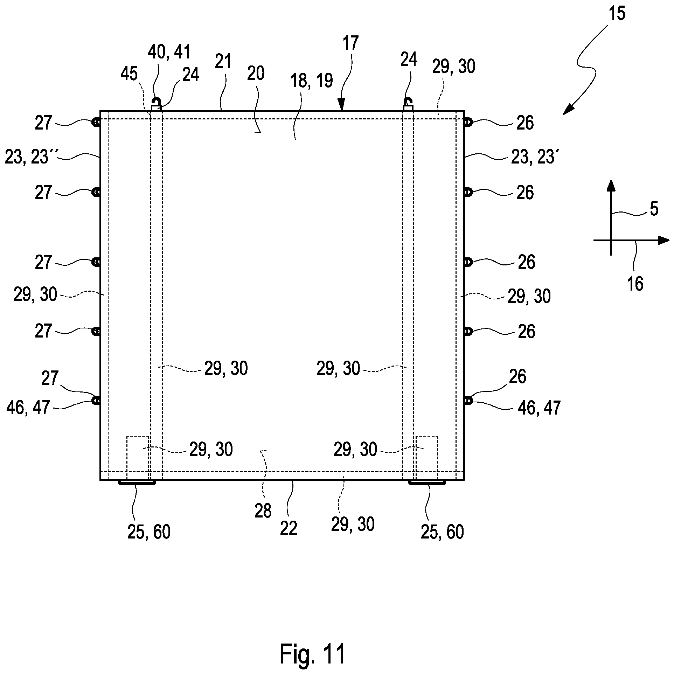

Fig. 11 zeigt ein weiteres Ausführungsbeispiel der Schutzeinrichtung 15. Dieses Ausführungsbeispiel unterscheidet sich von den zuvor gezeigten Beispielen insbesondere dadurch, dass die Bedeckung 17 und somit die Schutzeinrichtung 15 in Querrichtung 16 kleiner ausgebildet ist, derart, dass mit dieser Schutzeinrichtung 15 im Montagezustand 37 lediglich eine der großen Seiten 9" des Transportwagens 1 bedeckt wird. Möglich ist es dabei, mehrere solche Schutzeinrichtungen 15 am Transportwagen 1 zu montieren, um mehrere Seiten 9 des Transportwagens 1 zu bedecken.

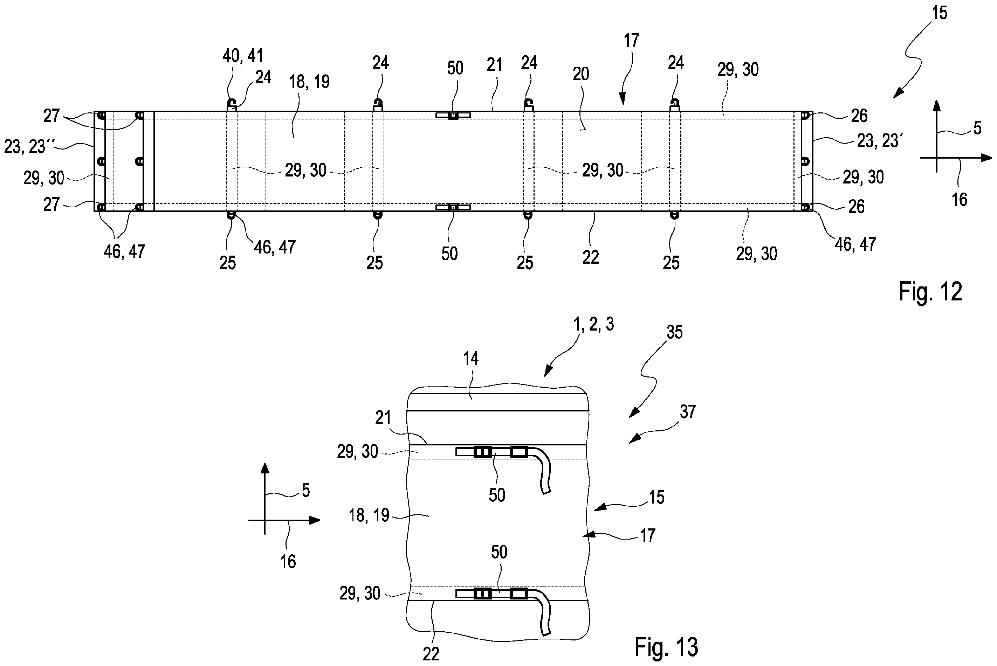

Ein weiteres Ausführungsbeispiel der Schutzeinrichtung 15 ist in Fig. 12 gezeigt. Dieses Ausführungsbeispiel unterscheidet sich von den in den Fig. 2 sowie 4 bis 10 gezeigten Beispielen insbesondere durch die Dimensionierung der Bedeckung 17 in Höhenrichtung 5, die kleiner ist als in den zuvor gezeigten Beispielen. Somit bedeckt die Schutzeinrichtung 15 in Montagezustand 37 zwar alle Seiten 9 des Transportwagens 1, in Höhenrichtung 5 jedoch lediglich einen Teil der jeweiligen Seite 9. Diese Schutzeinrichtung 15 kann insbesondere in einem höheren Bereich des Transportwagens 1 montiert werden. Dabei sind, wie im Beispiel der Fig. 10, zwei Reihen von Gegenverbindungsmitteln 27 vorgesehen. Bei diesem Beispiel ist zudem im Bereich der Oberkante 21 und der Unterkante 22 jeweils ein Gurtsystem 50 vorgesehen, mit dem die Erstreckung der Bedeckung 17 in Querrichtung 16 verändert werden kann. Somit können geometrische Änderungen des Transportwagens 1, insbesondere in Umfangsrichtung 8, besser ausgeglichen werden. Beim in Fig. 12 gezeigten Beispiel weisen die Spannmittel 25 jeweils einen Ring 46, insbesondere einen D-Ring 47, auf, an den wiederum, insbesondere über einen nicht gezeigten Gummizug 48 ein nicht gezeigter Haken 40 angebracht werden kann. Auch kann an den jeweiligen Ring 46 insbesondere ein nicht gezeigter Haken 40 einer in Höhenrichtung 5 weiter unten angeordneten, nicht gezeigten, Schutzeinrichtung 15 angebracht werden. Fig. 13 zeigt dabei die Anordnung 35 mit dieser Schutzeinrichtung 15 im Bereich der Gurtsysteme 50. Zu sehen ist insbesondere, dass das jeweilige Gurtsystem 50 an der an der zugehörigen Kante 21, 22 verlaufenden Verstärkung 29 angebracht ist.

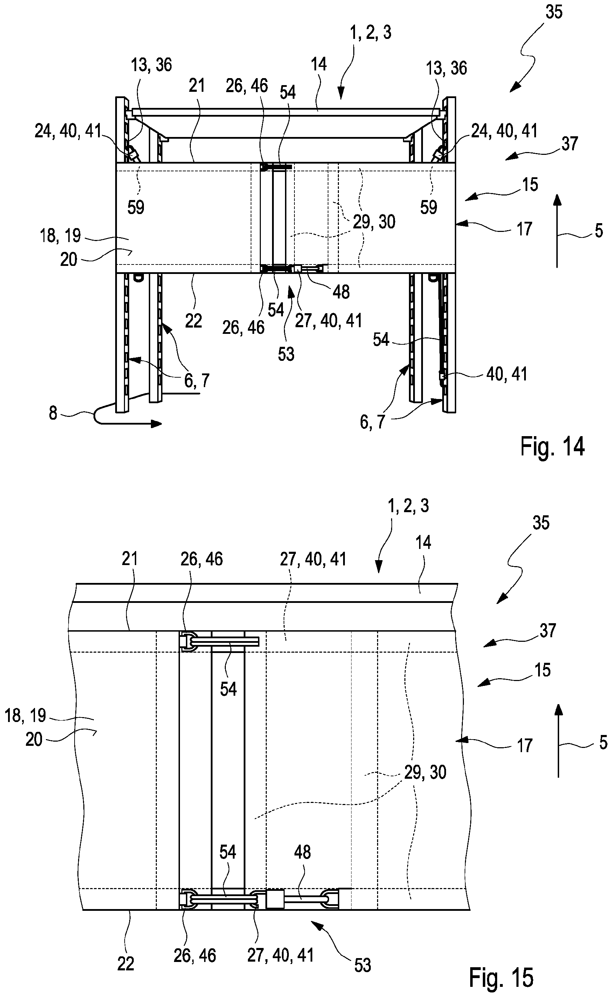

Fig. 14 zeigt ein weiteres Ausführungsbeispiel der Anordnung 35 bei einem anderen Ausführungsbeispiel der Schutzeinrichtung 15 im Montagezustand 37. Zu sehen sind dabei lediglich ein Boden 14 und die Träger 6 des Transportwagens 1. Bei diesem Ausführungsbeispiel erstreckt sich die Schutzeinrichtung 15 beziehungsweise die Bedeckung 17, ähnlich wie beim in Fig. 13 gezeigten Beispiel, in Höhenrichtung 5 lediglich über einen geringen Teilbereich des Transportwagens 1, so dass die entsprechenden Seiten 9 in Höhenrichtung 5 lediglich teilweise bedeckt sind.

Fig. 15 zeigt die Anordnung 35 aus Fig. 14 im Bereich der Seitenkanten 23 der Schutzeinrichtung 15. Bei diesem Ausführungsbeispiel sind die oberen Strukturen 36 nicht durch die oberste Aufnahme 13 des jeweiligen Trägers 6, sondern durch eine in Höhenrichtung 5 weiter unten angeordnete Aufnahme 13 gebildet. Die Gegenverbindungsmittel 27 sind mit Haken 40, insbesondere Karabinerhaken 41, ausgestattet, wobei in diesem Ausführungsbeispiel lediglich zwei solche

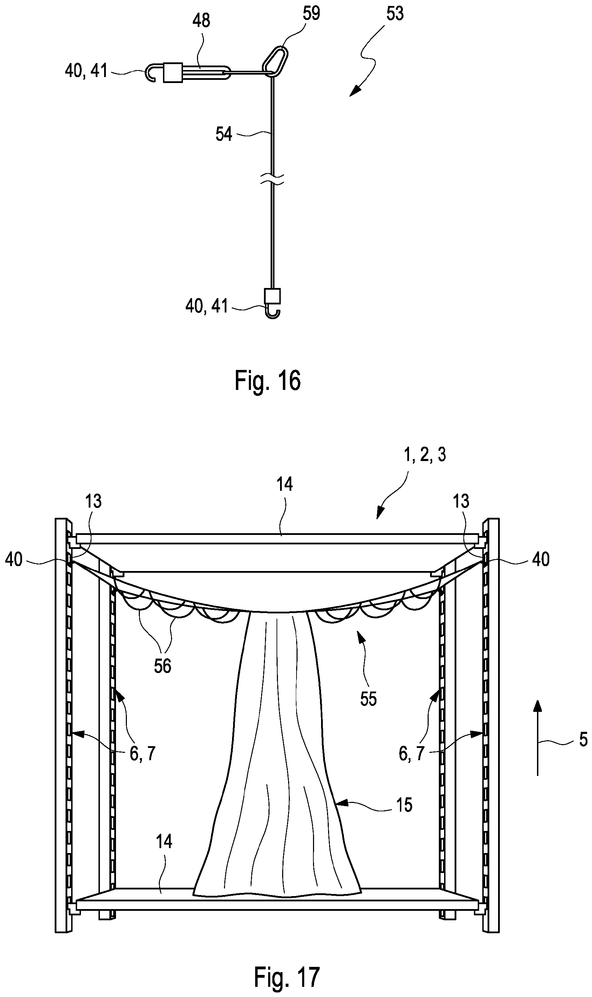

Gegenverbindungsmittel 27vorgesehen sind. Die Schutzeinrichtung 15 ist ferner mit einem Zugsystem 53 versehen, das in Fig. 16 gesondert gezeigt ist. Das Zugsystem 53 weist ein Seil 54 und einen Haken 40 auf. Das Seil 54 ist durch den Ring 46 des jeweiligen Verbindungsmittels 26 geführt und verbindet diese mit den Gegenverbindungsmitteln 27. Zudem ist das Seil 54 über eine Führung 59, welche insbesondere an einem der Haltemittel 24 angebracht sein kann, entlang einer der Träger 6 geführt und mit Hilfe des Hakens 40 des Zugsystems 53 an dem Träger 6, insbesondere an einer Aufnahme 13 des Trägers 6, die in Höhenrichtung 5 unterhalb der Bedeckung 17 angeordnet ist, angebracht. Am dem vom Haken 40 entfernten Ende des Seils 54 ist ein weiterer Haken 40 über einen Gummizug 48 angebracht, wobei dieser Haken 40 an einem der Verbindungsmittel 26 angebracht werden kann. Somit erfolgt ein Spannen in Querrichtung 16 beziehungsweise in Umfangsrichtung 8.

Es versteht sich, dass die unterschiedlichen Schutzeinrichtungen 15, welche sich insbesondere entlang der Erstreckung in Höhenrichtung 5 und/oder in Querrichtung 16 unterscheiden, im Rahmen eines Baukastensystems bereitgestellt werden und wahlweise an den Transportwagen 1 angebracht werden können, um diesen individuell zu bedecken.

Alle gezeigten Bedeckungen 17 können dabei aus dem in Fig. 3 gezeigten Gewirke 32 hergestellt sein bzw. bestehen.

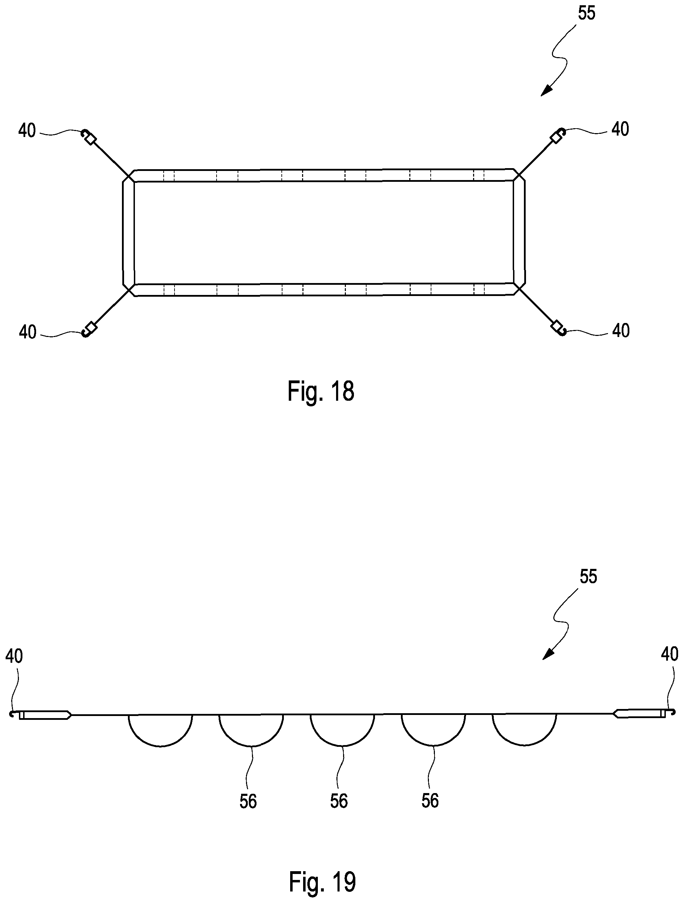

Ein vereinfachter Transport von Schutzeinrichtungen 15 wird durch eine Halteeinrichtung 55 ermöglicht, die in Fig. 17 dargestellt ist. Die Halteeinrichtung 55 ist in Fig. 18 in einer Draufsicht und in Fig. 19 in einer Seitenansicht gezeigt. Die Halteeinrichtung 55 ist aus einem flexiblen Material, beispielsweise aus Textil, hergestellt und weist vier Haken 40 auf, welche jeweils an einem der Träger 6 lösbar angebracht, insbesondere in einer zugehörigen Aufnahme 13 eingehängt, werden können. Zudem ist an der Halteeinrichtung 55 zum Abhängen und Halten von Schutzeinrichtungen 15 zumindest eine Hängeschlaufe 56 vorgesehen, wobei das gezeigte Beispiel mehrere Hängeschlaufen 56 aufweist, durch die, wie in Fig. 17 zu sehen ist, jeweils wenigstens eine Schutzeinrichtung 15 durchgeführt und somit abgehängt und gehalten werden kann. Hierdurch lassen sich mehrere Schutzeinrichtungen 15 innerhalb des gleichen Transportwagens 1 kompakt und sicher aufbewahren und transportieren.

**In** den gezeigten Beispielen sind bzw. werden die Haltemittel 24 und die Spannmittel 25 jeweils in Eckbereichen 57 des Transportwagens 1 angebracht. Selbstverständlich können die Haltemittel 24 und/oder die Spannmittel 25 auch außerhalb der Eckbereiche 57 an den Transportwagen 1, beispielsweise an einem der Böden 14, angebracht werden. Dementsprechend kann zumindest eine der Strukturen 36, 39 im Bereich des Bodens 14 oder durch den Boden 14 gebildet sein.

## Patentansprüche

1. Anordnung (35) mit einem Transportwagen (1) und einer Schutzeinrichtung (15), welche zumindest eine Seite (9) des Transportwagens (1) bedeckt, wobei der Transportwagen (1) mehrere Träger (6) und wenigstens einen von den Trägern (6) getragenen Boden (14) zur Ablage von Transportgut aufweist,
- wobei die Schutzeinrichtung (15) eine Bedeckung (17) aufweist, die sich in einer Höhenrichtung (5) und in einer quer zur Höhenrichtung (5) verlaufenen Querrichtung (16) erstreckt, derart, dass die Bedeckung (17) den Transportwagen (1) in einer Umfangsrichtung (8) des Transportwagens (1) seitlich bedeckt,
- wobei die Schutzeinrichtung (15) wenigstens ein Verbindungsmittel (26) und wenigstens ein in Querrichtung (16) zum Verbindungsmittel (26) beabstandetes Gegenverbindungsmittel (27) aufweist, und das wenigstens eine Verbindungsmittel (26) und das wenigstens eine Gegenverbindungsmittel (27) die Bedeckung (17) in Querrichtung (16) spannen,
- wobei die Schutzeinrichtung (15) wenigstens ein Haltemittel (24) aufweist, welches die Bedeckung (17) an einer oberen Struktur (36) des Transportwagens (1) anbringt, derart, dass die Schutzeinrichtung (15) am Transportwagen (1) gehalten ist,
- wobei die Bedeckung (17) aus einem Bedeckstoff (18) hergestellt ist, **dadurch gekennzeichnet,**
- **dass** die Schutzeinrichtung (15) wenigstens ein in Höhenrichtung (5) zum wenigstens einen Haltemittel (24) beabstandetes Spannmittel (25) aufweist, welches die Bedeckung (17) an einer in Höhenrichtung (5) zu der oberen Struktur (36) beabstandeten unteren Struktur (39) des Transportwagens (1) anbringt,
- **dass** das wenigstens eine Haltemittel (24) und das wenigstens eine Spannmittel (25) die Bedeckung (17) in Höhenrichtung (5) spannen,
- **dass** das zumindest eine Haltemittel (24) und das zumindest eine Spannmittel (25) derart angeordnet sind, dass sie beim am Transportwagen (1) angebrachten Zustand jeweils in einem Eckbereich (57) des Transportwagens (1) angeordnet sind.

2. Anordnung nach Anspruch 1,
**dadurch gekennzeichnet,**
**dass** das Haltemittel (24) und/oder das Spannmittel (25) eine an der Bedeckung (17) angebrachte Schlaufe (45, 60) aufweist.

3. Anordnung nach Anspruch 1 oder 2,
**dadurch gekennzeichnet,**
**dass** das Haltemittel (24) und/oder das Spannmittel (25) einen Haken (40) zum Anbringen an dem Transportwagen (1) aufweist, wobei insbesondere vorgesehen sein kann, dass der Haken (40) an der Schlaufe (45) nach Anspruch 2 angebracht ist.

4. Anordnung nach einem der Ansprüche 1 bis 3,
**dadurch gekennzeichnet,**
**dass** jeweils ein Verbindungsmittel (26) und ein Gegenverbindungsmittel (27) eine lösbare Verbindung (43) bilden, derart, dass die Verbindung (43) die Bedeckung (17) im Montagezustand (37) in Querrichtung (16) spannt.

5. Anordnung nach einem der Ansprüche 1 bis 4,
**dadurch gekennzeichnet,**
**dass** die Schutzeinrichtung (15) jeweils zumindest zwei zueinander in Höhenrichtung (5) beabstandete Verbindungsmittel (26) und Gegenverbindungsmittel (27) aufweist.

6. Anordnung nach einem der Ansprüche 1 bis 5,
**dadurch gekennzeichnet,**
**dass** die Schutzeinrichtung (15) zum jeweiligen Haltemittel (24) ein zugehöriges Spannmittel (25) aufweist.

7. Anordnung nach einem der Ansprüche 1 bis 6,
**dadurch gekennzeichnet,**
**dass** eine Elastizität des Bedeckstoffs (18) in Höhenrichtung (5) größer ist als in Querrichtung (16).

8. Anordnung nach einem der Ansprüche 1 bis 7,
**dadurch gekennzeichnet,**
**dass** der Bedeckstoff (18) als ein Textil (19) ausgebildet ist.

9. Anordnung nach einem der Ansprüche 1 bis 8,
**dadurch gekennzeichnet,**
**dass** der Bedeckstoff (18) als ein Gewirke (32), insbesondere als ein Kettengewirke (33), ausgebildet ist.

10. Anordnung nach einem der Ansprüche 1 bis 9,
**dadurch gekennzeichnet,**
**dass** das Verbindungsmittel (26) und/oder das Gegenverbindungsmittel (27) in Querrichtung (16) elastisch ausgebildet ist.

11. Anordnung nach einem der Ansprüche 1 bis 10,
**dadurch gekennzeichnet,**
**dass** am Bedeckstoff (18) zumindest eine Verstärkung (29) angebracht ist.

12. Anordnung nach einem der Ansprüche 1 bis 11,
**dadurch gekennzeichnet,**
**dass** die Bedeckung (17) an einer dem Spannmittel (25) zugewandten Unterkante (22) mit einem sich in Höhenrichtung (5) begrenzten Schlitz (51) versehen ist.

13. Anordnung nach Anspruch einem der Ansprüche 1 bis 12,
**dadurch gekennzeichnet,**
**dass** querendseitige Seitenkanten (23) der Bedeckung (17) im Montagezustand (37) zueinander in Querrichtung (16) beabstandet sind.

14. Anordnung nach einem der Ansprüche 1 bis 13,
**dadurch gekennzeichnet,**
- **dass** zumindest eines der wenigstens einen Spannmittel (25) mit wenigstens einem der Verbindungsmittel (26) und/oder Gegenverbindungsmittel (27) zusammenwirkt, um, gemeinsam mit dem wenigstens einen Haltemittel (24), die Bedeckung (17) in Höhenrichtung (5) zu spannen,
- **dass** das Zusammenwirken des Spannmittels (25) mit dem wenigstens einen Verbindungsmittel (26) und/oder Gegenverbindungsmittel (27) in der Art einer Seilführung und/oder Gummiführung erfolgt, derart, dass ein Seil (54) und/oder Gummi durch diejenigen Verbindungsmittel (26) und/oder Gegenverbindungsmittel (27) geführt ist, mit denen das Spannmittel (25) zusammenwirkt.

## Claims

1. Arrangement (35) with a transport trolley (1) and a protective apparatus (15) which covers at least one side (9) of the transport trolley (1), the transport trolley (1) having multiple carriers (6) and at least one base (14) supported by the carriers (6) for placing the goods to be transported,
- wherein the protective apparatus (15) has a covering (17) which extends in a vertical direction (5) and in a transverse direction (16) extending transversely to the vertical direction (5), such that the covering (17) covers the sides of the transport trolley (1) in a peripheral direction (8) of the transport trolley (1),
- wherein the protective apparatus (15) has at least one connecting means (26) and at least one opposite connecting means (27) spaced apart from the connecting means (26) in transverse direction (16), and the at least one connecting means (26) and the at least one opposite connecting means (27) tension the covering (17) in transverse direction (16),
- wherein the protective apparatus (15) has at least one holding means (24) which attaches the covering (17) to an upper structure (36) of the transport trolley (1) such that the protective apparatus (15) is held on the transport trolley (1),
- wherein the covering (17) is made from a covering material (18), **characterized in that**
- the protective apparatus (15) has at least one tensioning means (25) which is spaced apart from the at least one holding means (24) in vertical direction (5) and which attaches the covering (17) to a lower structure (39) of the transport trolley (1) which is spaced apart from the upper structure (36) in vertical direction (5),
- **in that** the at least one holding means (24) and the at least one tensioning means (25) tension the covering (17) in vertical direction (5),
- **in that** the at least one holding means (24) and the at least one tensioning means (25) are arranged in such a way that they are each arranged in a corner region (57) of the transport trolley (1) when attached to the transport trolley (1).

2. Arrangement according to claim 1,
**characterized in that**
the holding means (24) and/or the tensioning means (25) has a loop (45, 60) attached to the covering (17).

3. Arrangement according to claim 1 or 2,
**characterized in that**
the holding means (24) and/or the tensioning means (25) has a hook (40) for attachment to the transport trolley (1), wherein it can be provided in particular that the hook (40) is attached to the loop (45) according to claim 2.

4. Arrangement according to any one of claims 1 to 3,
**characterized in that**
a connecting means (26) and an opposite connecting means (27) respectively form a detachable connection (43) such that the connection (43) tensions the covering (17) in transverse direction (16) in the assembled state (37).

5. Arrangement according to any one of claims 1 to 4,
**characterized in that**
the protective apparatus (15) has respectively at least two connecting means (26) and opposite connecting means (27) spaced apart from each other in vertical direction (5).

6. Arrangement according to any one of claims 1 to 5,
**characterized in that**
the protective apparatus (15) has an associated tensioning means (25) to the respective holding means (24).

7. Arrangement according to any one of claims 1 to 6,
**characterized in that**
an elasticity of the covering material (18) is greater in vertical direction (5) than in transverse direction (16).

8. Arrangement according to any one of claims 1 to 7,
**characterized in that**
the covering material (18) is in the form of a textile (19).

9. Arrangement according to any one of claims 1 to 8,
**characterized in that**
the covering fabric (18) is in the form of a knitted fabric (32), in particular in the form of a warp knitted fabric (33).

10. Arrangement according to any one of claims 1 to 9,
**characterized in that**
the connecting means (26) and/or the opposite connecting means (27) is configured to be elastic in transverse direction (16).

11. Arrangement according to any one of claims 1 to 10,
**characterized in that**
at least one reinforcement (29) is attached to the covering material (18).

12. Arrangement according to any one of claims 1 to 11,
**characterized in that**
the covering (17) is provided with a slit (51) limited in vertical direction (5) on a lower edge (22) facing the tensioning means (25).

13. Arrangement according to any one of claims 1 to 12,
**characterized in that**
transverse end side edges (23) of the covering (17) are spaced apart from one another in transverse direction (16) in the assembled state (37).

14. Arrangement according to any one of claims 1 to 13,
**characterized in that**
- at least one of the at least one tensioning means (25) cooperates with at least one of the connecting means (26) and/or opposite connecting means (27) in order to tension the covering (17) in vertical direction (5) together with the at least one holding means (24),
- the cooperation of the tensioning means (25) with the at least one connecting means (26) and/or opposite connecting means (27) takes place in the manner of a cable guide and/or rubber guide such that a cable (54) and/or rubber is guided through those connecting means (26) and/or opposite connecting means (27) with which the tensioning means (25) cooperates.

## Revendications

1. Agencement (35) avec un chariot de transport (1) et un dispositif de protection (15) qui recouvre au moins un côté (9) du chariot de transport (1), dans lequel le chariot de transport (1) présente plusieurs supports (6) et au moins un fond (14) porté par les supports (6) pour le dépôt de marchandises à transporter,
- dans lequel le dispositif de protection (15) présente un recouvrement (17) qui s'étend dans un sens vertical (5) et dans un sens transversal (16) s'étendant transversalement au sens vertical (5) de telle manière que le recouvrement (17) recouvre latéralement le chariot de transport (1) dans un sens périphérique (8) du chariot de transport (1),
- dans lequel le dispositif de protection (15) présente au moins un moyen de liaison (26) et au moins un moyen de liaison antagoniste (27) espacé dans le sens transversal (16) par rapport au moyen de liaison (26), et le au moins un moyen de liaison (26) et le au moins un moyen de liaison antagoniste (27) serrent le recouvrement (17) dans le sens transversal (16),
- dans lequel le dispositif de protection (15) présente au moins un moyen de retenue (24) qui monte le recouvrement (17) au niveau d'une structure (36) supérieure du chariot de transport (1) de telle manière que le dispositif de protection (15) est maintenu au niveau du chariot de transport (1),
- dans lequel le recouvrement (17) est fabriqué en une substance de recouvrement (18), **caractérisé en ce que**
- le dispositif de protection (15) présente au moins un moyen de serrage (25) espacé dans le sens vertical (5) par rapport à au moins un moyen de retenue (24), moyen de serrage qui monte le recouvrement (17) au niveau d'une structure (39) inférieure du chariot de transport (1) espacée dans le sens vertical (5) par rapport à la structure (36) supérieure,
- le au moins un moyen de retenue (24) et le au moins un moyen de serrage (25) serrent le recouvrement (17) dans le sens vertical (5),
- le au moins un moyen de retenue (24) et le au moins un moyen de serrage (25) sont agencés de telle manière qu'ils sont agencés respectivement dans une zone de coin (57) du chariot de transport (1) lorsqu'ils sont fixés au niveau du chariot de transport (1).

2. Agencement selon la revendication 1,
**caractérisé en ce que**
le moyen de retenue (24) et/ou le moyen de serrage (25) présente une boucle (45, 60) fixée au niveau du recouvrement (17).

3. Agencement selon la revendication 1 ou 2,
**caractérisé en ce que**
le moyen de retenue (24) et/ou le moyen de serrage (25) présente un crochet (40) pour la fixation au niveau du chariot de transport (1), dans lequel il peut être prévu en particulier que le crochet (40) soit fixé au niveau de la boucle (45) selon la revendication 2.

4. Agencement selon l'une quelconque des revendications 1 à 3,
**caractérisé en ce que**
respectivement un moyen de liaison (26) et un moyen de liaison antagoniste (27) forment une liaison (43) amovible de telle manière que la liaison (43) serre le recouvrement (17) dans l'état assemblé (37) dans le sens transversal (16).

5. Agencement selon l'une quelconque des revendications 1 à 4,
**caractérisé en ce que**
le dispositif de protection (15) présente respectivement au moins deux moyens de liaison (26) et moyens de liaison antagonistes (27) espacés l'un par rapport à l'autre dans le sens vertical (5).

6. Agencement selon l'une quelconque des revendications 1 à 5,
**caractérisé en ce que**
le dispositif de protection (15) présente un moyen de serrage (25) afférent par rapport au moyen de retenue (24) respectif.

7. Agencement selon l'une quelconque des revendications 1 à 6,
**caractérisé en ce que**
une élasticité de la substance de recouvrement (18) dans le sens vertical (5) est supérieure à celle dans le sens transversal (16).

8. Agencement selon l'une quelconque des revendications 1 à 7,
**caractérisé en ce que**
la substance de recouvrement (18) est formée comme un textile (19).

9. Agencement selon l'une quelconque des revendications 1 à 8,
**caractérisé en ce que**
la substance de recouvrement (18) est formée comme un tricot (32), en particulier comme un tricot à chaîne (33).

10. Agencement selon l'une quelconque des revendications 1 à 9,
**caractérisé en ce que**
le moyen de liaison (26) et/ou le moyen de liaison antagoniste (27) est formé de manière élastique dans le sens transversal (16).

11. Agencement selon l'une quelconque des revendications 1 à 10,
**caractérisé en ce que**
au moins un renforcement (29) est fixé au niveau de la substance de recouvrement (18).

12. Agencement selon l'une quelconque des revendications 1 à 11,
**caractérisé en ce que**
le recouvrement (17) est pourvu, au niveau d'une arête inférieure (22) tournée vers le moyen de serrage (25), d'une fente (51) délimitée dans le sens vertical (5).

13. Agencement selon l'une quelconque des revendications 1 à 12,
**caractérisé en ce que**
des arêtes latérales (23) côté extrémité transversale du recouvrement (17) sont espacées l'une par rapport à l'autre dans le sens transversal (16) dans l'état assemblé (37).

14. Agencement selon l'une quelconque des revendications 1 à 13,
**caractérisé en ce que**
- au moins un des au moins un moyen de serrage (25) coopère avec au moins un des moyens de liaison (26) et/ou moyens de liaison antagonistes (27) afin de serrer le recouvrement (17) dans le sens vertical (5) conjointement avec le au moins un moyen de retenue (24),
- la coopération du moyen de serrage (25) avec le au moins un moyen de liaison (26) et/ou moyen de liaison antagoniste (27) s'effectue à la manière d'un guidage par câble et/ou guidage en caoutchouc de telle manière qu'un câble (54) et/ou du caoutchouc est guidé par les moyens de liaison (26) et/ou moyens de liaison antagonistes (27), avec lesquels le moyen de serrage (25) coopère.
